# EUROPEAN PATENT SPECIFICATION

(11) **EP 1 566 737 B1**
(45) Date of publication and mention of the grant of the patent: **04.02.2009**
(21) Application number: 04003680.8
(22) Date of filing: 18.02.2004
(51) Int. Cl.: G06F 13/40, G06F 3/06

(54) **ATAPI switch**
ATAPI Schalter
Commutateur ATAPI

(43) Date of publication of application: 24.08.2005
(73) Proprietor: Harman Becker Automotive Systems GmbH, 76307 Karlsbad (DE)
(72) Inventor: Weisser, Pirmin, 78052 VS-Villingen (DE); Maier, Michael, 78054 VS-Schwenningen (DE); Gausmann, Rüdiger, 78112 St. Georgen (DE)
(74) Representative: Grünecker, Kinkeldey, Stockmair & Schwanhäusser Anwaltssozietät

(56) References cited:
- JP-A- 08 328 772
- US-A- 4 980 818
- US-B1- 6 192 433
- US-B1- 6 549 966
- "Serial ATA II: Port Selector"[Online] 28 July 2003 (2003-07-28), XP002286551 Retrieved from the Internet: URL:http://www.serialata.org/collateral/pd f/ps_100_Gold.pdf> [retrieved on 2004-06-30]

## Description

The present invention relates to a data transfer interface enabling access of a plurality of data processing devices to a single data storage drive. In particular, the present invention relates to an information and entertainment system equipped with two processors performing distinct tasks and a data transfer interface enabling both of the processors to access a single data storage drive.

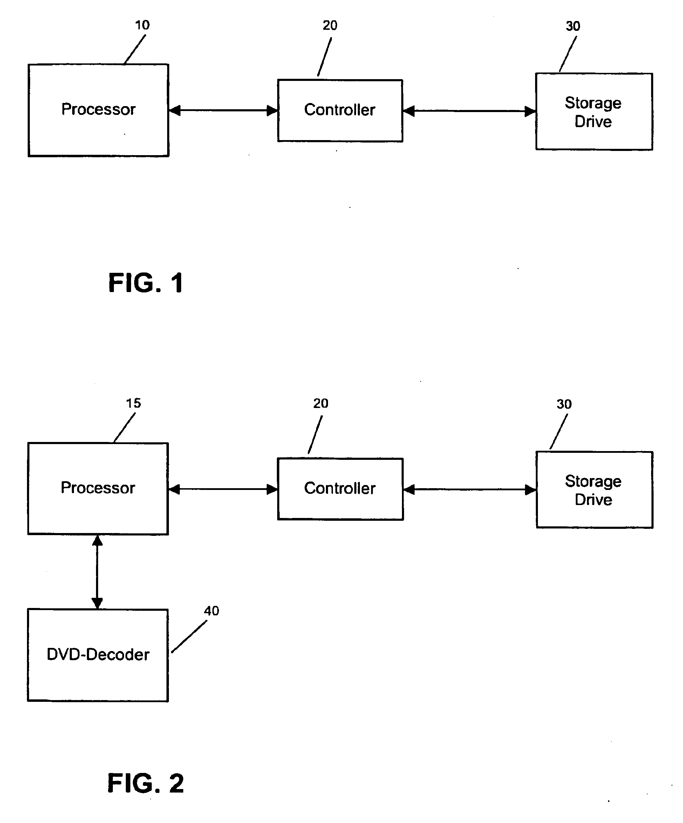

A system architecture employing a single processor which accesses one or plural storage drives is very popular for computer system such as home and office personal computers. Such a computer system is schematically illustrated in Fig. 1. A processor 10 is provided for carrying out data processing and control functionalities. The computer system is further equipped with a storage drive 30 and a controller 20 allowing processor 10 to access the storage drive 30. The processor 10 and controller 20 are both connected to a common data bus. For example, internal data buses like a PCI bus or an ISA bus, etc are employed. As storage drive 30, usually a hard disk drive or an optical storage drive such as a DVD drive is provided.

For connecting storage drives to a computer system, an interface in accordance with the ATA/ATAPI standard is widely used. The original ATA (AT-attachment) bus standard has been extended with the AT attachment packet interface (ATAPI) and is since then referred to as ATA/ATAPI standard. In particular, the ATA/ATAPI standard supports the connection of drives utilising exchangeable storage media to computer systems such as personal computers.

A transfer of data between a host computer and an ATAPI storage drive is effected by a set of registers utilised by both the storage drive and the host computer. The set of registers is named task file. ATAPI storage drives require device-specific control information such as a sector, a cylinder number or a head ID to search for a position information of a read/write head. This information is individually transferred and written into a register of the storage drive.

A communication session with a storage drive using ATA/ATAPI is carried out in several phases. The host computer writes a command to a command register on the storage drive during a command phase. Thereafter a data phase is entered in which the data is transferred from/to the storage drive.

In the above described computer system, controller 20 generates ATA/ATAPI commands in accordance with access requests from processor 10 and transfers data between the processor 10 and the storage drive 30.

In such a computer system, functionalities of the computer system are implemented by software programs being executed by processor 10. Specifically, when the computer system is employed as a multi-media system, processor 10 is required to provide a high computation performance for computations such as video decoding and sound decoding. Therefore, personal computer based multi-media systems are equipped with high performance processors.

For a consumer device employing an embedded system, for example, a vehicle information and entertainment system, this approach is not suitable. Such embedded systems are typically provided with a processor of a comparably low computing power. For performing computation functionalities requiring a high computation power, such as video decoding, a specialized auxiliary processor is provided which very efficiently performs such specific computing functionalities.

A first approach for the configuration of a computer system utilising an auxiliary processor is illustrated in Fig. 2. Similar to the computer system described with reference to Fig. 1, there is provided a main processor 15, a storage drive 30 and a controller 20 allowing the main processor 15 to access the storage drive 30. The main processor 15 and the controller 20 are inter-connected by a common data bus of the computer system. Further provided is an auxiliary processor 40 connected to main processor 15 for performing specific processing functions.

According to this approach, main processor 15 supplies auxiliary processor 40 with data from storage drive 30. To this end, main processor 15 carries out an access operation in order to obtain the required data from storage drive 30. The obtained data is forwarded from main processor 15 to auxiliary processor 40 to be processed thereon.

The described system configuration has the drawback that all data required by auxiliary processor 40 must be retrieved from storage drive 30 and forwarded by main processor 15. In consequence, a high processing load is caused on the main processor for supplying auxiliary processor 40 with data. The remaining processing resources of main processor 15 may be insufficient to simultaneously carry out further processing tasks such as system control operations, and navigation data processing for providing car navigation, and the like.

In such applications as a multi-media system, auxiliary processor 40 is employed for decoding video data. Accordingly, main processor 15 retrieves and forwards large amounts of video data, correspondingly dissipating a large portion of its processing resources.

In addition, data required by auxiliary processor 40 may be stored within a file system of a sophisticated structure. For instance, data on DVD video disks are organized according to a specific hierarchical file system structure. Required data portions can only be properly accessed by a host capable of navigating this specific file structure. Accordingly, main processor 15 needs to be equipped with file system navigation capabilities corresponding to a file system structure of data to be processed by auxiliary processor 40. Specifically, providing main processor 15 with DVD video disk file navigation capabilities requires a substantial development effort.

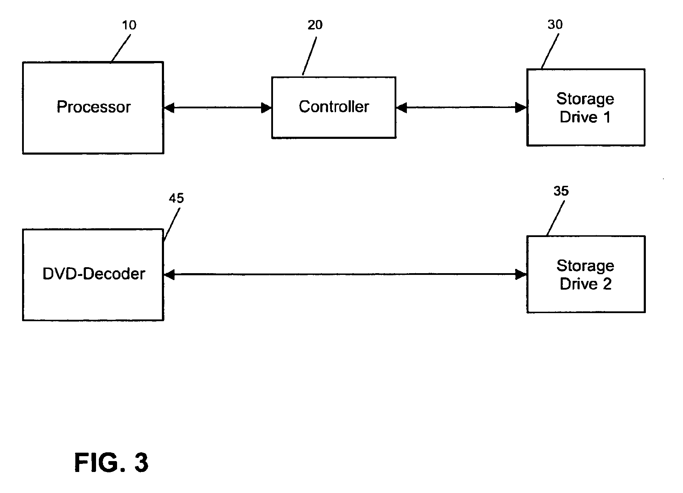

Another conventional configuration of a computer system employing an auxiliary processor is illustrated in Fig. 3. According to this approach, an information and entertainment system is equipped with two processors 10 and 45. Each processor performs specific tasks of the system. The first processor 10 accesses a first storage drive 30 via controller 20. Data required by second processor 45 are provided on a separate additional storage drive 35 to be directly accessed by the second processor.

For instance, first processor 10 provides system control and user interface functionalities of the information and entertainment system. In addition, this processor may run a car navigation software. As first storage drive 30 a DVD drive is provided in order to supply navigation information such as road maps or a software update of the system software from respective DVD media. The second processor 45 is capable of accessing and decoding DVD video data from a DVD disk inserted into additional DVD drive 35. For this purpose, it is desirable to employ a commercially available DVD decoder chip as second processor 45. Such decoder chips are widely employed in consumer DVD players and include an ATA/ATAPI interface for directly accessing a DVD-drive. In addition, these DVD decoder chips are already equipped with DVD file navigation capabilities.

It is one problem of the described system configuration, that two separate storage drives are required. The space requirements resulting from utilizing two separate storage drives render such a system unsuitable to be installed in a vehicle or in other application areas being subject to space restrictions. In addition, providing two different storage drives in an information and entertainment system results in a higher hardware effort and correspondingly increased productions cost.

It is another problem that a system comprising two separate storage drives, each supplying a different type of data, is difficult to operate. The first storage drive 30 for instance only accepts CD or DVD media storing a software update or vehicle navigation data. The second storage drive 35 only accepts DVD video disks.

The conventional approaches apparently fail to provide plural data processing devices with an efficient access to data stored on a data storage drive. Consequently, the present invention aims to provide an improved data transfer interface resolving the problems of the conventional approaches.

The specification "Serial ATA II: Port Selector' issued by the Serial ATA II work Group (www.serialata.org, July 28, 2003) describes the specification of a port selector for a serial ATA II interface. Two host devices may access a single hard disk drive, wherein access is granted only to one of the two host devices at any one time. The port which receives the first reset signal can be selected as active port automatically. The host device connected to the active port may, on the other hand, switch the active port for issuing selection signals.

JP-A-08 328 772 describes a printer switching device connecting a plurality of computers to a single printer. Each computer is connected via a separate switching circuit. The switching circuits are controlled by a control part, monitoring the data transfer between a currently connected computer and the printer. If it is detected that no further data are transferred between the connected computer and the printer, the respective computer is disconnected and the next computer is connected to the printer.

It is the object of the present invention to provide an improved data transfer interface enabling a plurality of processing devices access to a single data storage drive.
This is achieved by the features of the independent claims.

An advantage is that the switch means prevents the data processing devices from interfering with each others access to the data storage drive. Thus, data transfers can be reliably carried out without collisions of access signals issued by different data processing devices.

In addition, by employing only a single storage drive, the present invention permits hardware and space efficient system configurations.

Preferably, the data transfer interface of the present invention enables two separate data processing devices to access a single data storage drive.

The switch means comprises a plurality of switches, each of which connecting an individual one of the plural data processing devices and the data storage drive. In this manner, a transfer of signals between each processing device and the data storage drive can reliably be enabled or disabled. Thus, interference between signals from different data processing devices is avoided. In addition, processing devices not currently accessing the data storage drive but performing other tasks are not interrupted by signals from the data storage drive.

A switch controller controls the switches to connect the data storage drive to a single one of the plurality of data processing devices. In this manner, it is efficiently ensured that only one of the data processing devices may access the data storage drive at a time.

Each of the switches comprises a buffer for holding data transmitted via the switch. Thus, data to be transferred between a data processing device and the data storage drive are reliably transmitted when the switch is enabled.

The switch controller controls the buffers to transmit signals between the data storage drive and a single one of the plurality of data processing devices. Thus, a very efficient control of the transmission of data via the switches is achieved.

Preferably, the buffers are equipped with an output enabling means. The output enabling means is connected to the switch controller in order to control the output of data from the buffers. Accordingly, the transmission of data via the switches can reliably be controlled.

According to a further aspect, the control means are provided with a control unit for designating a single one of the plurality of data processing devices which is permitted to access the data storage drive. In this manner, an efficient control of the data transfer interface is provided.

Preferably, the control unit is part of one of the plurality of data processing devices. In this manner, a main processing device may designate one of the data processing devices permitted to access the data storage drive, so that a very flexible and efficient control of the data transfer interface is provided.

In accordance with another preferred embodiment, the switch means comprises a selector switch for enabling an electrical connection between control signal lines of the data storage drive and a single one of the data processing devices. The selector switch is controlled in accordance with a signal from the control means. Thus, control signals of the data storage drive can reliably be provided to a single one of the data processing devices. In consequence, control signals from the data storage drive do not interrupt the operation of other data processing devices.

In a further embodiment, the control means are equipped with a drive status detector for detecting an operating status of the data storage drive. The control means controls the switch means in accordance with the detection result. Accordingly, a data transfer interface of improved reliability is provided.

Preferably, the drive status detector detects the completion of a data transfer between the data storage drive and the data processing device which accesses the data storage drive. In this manner, a transfer of data can reliably be completed and is not interrupted by an action of the switch means.

In a further embodiment, the control means are equipped with a communication means for exchanging control signals with at least one of the plurality of data processing devices. Thus, the data transfer interface can interact with the data processing devices. For example, the data processing devices can detect the status of the data transfer interface.

Preferably, a data processing device is provided with an access permission signal and only accesses the data storage drive upon receiving the access permission signal. Accordingly, the data processing device is reliably informed whether it may attempt an access or not. Specifically, no provision needs to be made for the handling of unsuccessful access attempts.

Preferably, a data processing device accessing the data storage drive is provided with an access termination signal, whereupon the data processing device terminates its access to the data storage drive. Thus, an access of a long duration can be suspended in order to allow another data processing device to access the data storage drive. For example, a data processing device having a higher priority may suspend an access of a data processing device of a lower priority.

Preferably, the control means receives an access request from one of the plurality of data processing devices and the control means controls the switch means in accordance with the access request. Thus, the data transfer interface can be controlled to reliably provide a specific one of the data processing devices with an access to the data storage drive.

According to another preferred embodiment, the control means controls the switch means in such a manner that the currently performed data transfer operation between one of the data processing devices and the data storage drive is completed. Thus, each data transfer operation is reliably completed.

According to a preferred embodiment, the data processing devices and the switch means are connected by address signals lines, control signal lines and data signal lines. Such address signals lines, control signal lines and data signal lines also connect the switch means to the data storage drive. Thus, a suitable switching technique can be employed in accordance with the type of signal line.

Preferably, the data storage drive is accessed by an interface in accordance with the ATA/ATAPI standard. Such storage drives are now widely used and can be cost efficiently obtained.

Preferably, at least one of the plurality of data processing devices is equipped with an interface in accordance with the ATA/ATAPI standard. Such a data processing device may directly address a storage drive via the data transfer interface of the present invention.

Preferably, the data transfer interface comprises an ATA/ATAPI converter connected to one of the plurality of data processing devices for converting access signals of the data processing device into access signals in accordance with the ATA/ATAPI standard. Accordingly, also data processing devices not equipped with an ATA/ATAPI interface may utilise the data transfer interface of the present invention to access an ATAPI storage drive.

According to another preferred embodiment, an access to the data storage drive is carried out as a sequence of transfer operations. Each transfer operation includes an initialisation step for preparing the data storage drive for the data transfer and a transfer step for carrying out the transferring of data.

In another preferred embodiment, it is detected whether or not a previously selected data processing device accesses the data storage drive. Only after a previous access has been completed, another data processing device of the plurality of data processing device is selected to access the data storage drive. Thus, each access may reliably be completed.

Preferably, each data processing device may carry out a predetermined number of transfer operations before another data processing device accesses the data storage drive. Thus, the data transfer interface is efficiently controlled so that the data processing devices are equally provided with data storage resources.

Preferably, an access termination signal is provided to a data processing device before allowing another data processing device to access said data storage drive and the data processing device terminates the access by completing the current transfer operation. Thus, a transfer operation comprising plural phases may reliably be carried out. Specifically, the data transfer interface supports data transfer operations in accordance with the ATA/ATAPI standard.

Preferably, after lapse of a predetermined time interval, another data processing device is selected to access the data storage drive. Thus, the duration of an access interval is limited such that it is not possible for one data processing device to block access to the data storage drive for a long duration of time and to prevent the provision of data requested, for instance, by the user.

Further embodiments are the subject matter of dependent claims.

Additional features and advantages of the present invention will become apparent from the following description of the invention as illustrated in the drawings, wherein:
- Fig. 1: is a schematic diagram of a single processor computer system;
- Fig. 2: schematically illustrates a computer system equipped with an auxiliary processor for performing a specific processing operation;
- Fig. 3: is schematic diagram of a computer system comprising two processors independently accessing two separate storage drives;
- Fig. 4: is a schematic representation of a data transfer interface in accordance with the present invention;
- Fig. 5: is a schematic diagram of the data transfer interface illustrated in Fig. 4 including a drive status detector;
- Fig. 6: is a schematic representation of a data transfer interface of the present invention further equipped with a communication means;
- Fig. 7: depicts a data transfer interface in accordance with the present invention that is controlled by a control unit being part of a processing device;
- Fig. 8: is a schematic diagram of a data transfer interface in accordance with the present invention being equipped with an interface converter;
- Fig. 9: is a schematic representation of a switch means comprising a plurality of switches being part of the data transfer interface of the present invention;
- Fig. 10: is a diagram of the switch means depicted in Fig. 9 controlled by a switch controller;
- Fig. 11: is a an exemplary configuration of switches included in the switch means in accordance with the present invention;
- Fig. 12: shows a selector switch which is part of the switch means according to a preferred configuration;
- Fig. 13: is a schematic representation of an information and entertainment system provided with a data transfer interface in accordance with the present invention;
- Fig. 14: is hardware configuration diagram of the information and entertainment system illustrated in Fig. 13;
- Fig. 15: is a structure diagram of an interface controller of the data transfer interface illustrated in Fig. 14;
- Fig. 16: is flowchart depicting a method for enabling access of a plurality of data processing devices to a single data storage drive in accordance with the present invention;
- Fig. 17: illustrates the specific step of selecting a data processing device of the method depicted in Fig. 16 comprising the step of detecting completion of a previous access;
- Fig. 18: illustrates the step of selecting a data processing device of the method depicted in Fig. 16 comprising the step of terminating a previous access; and
- Fig. 19: illustrates the step of selecting a data processing device of the method depicted in Fig. 16 in accordance with an access request.

Illustrative embodiments of the present invention will now be described with reference to the drawings.

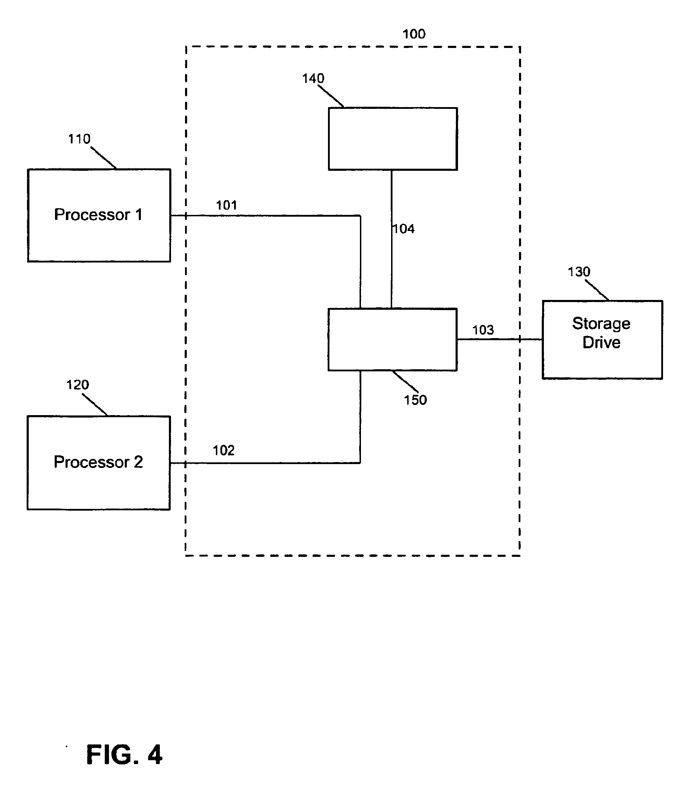

The general configuration of a data transfer interface in accordance with the present invention is illustrated in Fig. 4. Data transfer interface 100 includes a switch means 150 connected to a plurality of data processing devices 110, 120 and to a single data storage drive 130. The switch means 150 allows the data processing devices 110, 120 to access the data storage drive 130. The switch means is controlled by a control means to ensure that only a single one of the plural data processing devices 110, 120 accesses data storage drive 130 at a time. Specifically, the switch means enables or disables an exchange of signals between the data processing devices and the data storage drive. To this end, signal lines 101 and 102 of data processing devices 110, 120 are connected to switch means 150. The switch means is connected to data storage drive 130 by signal line 103.

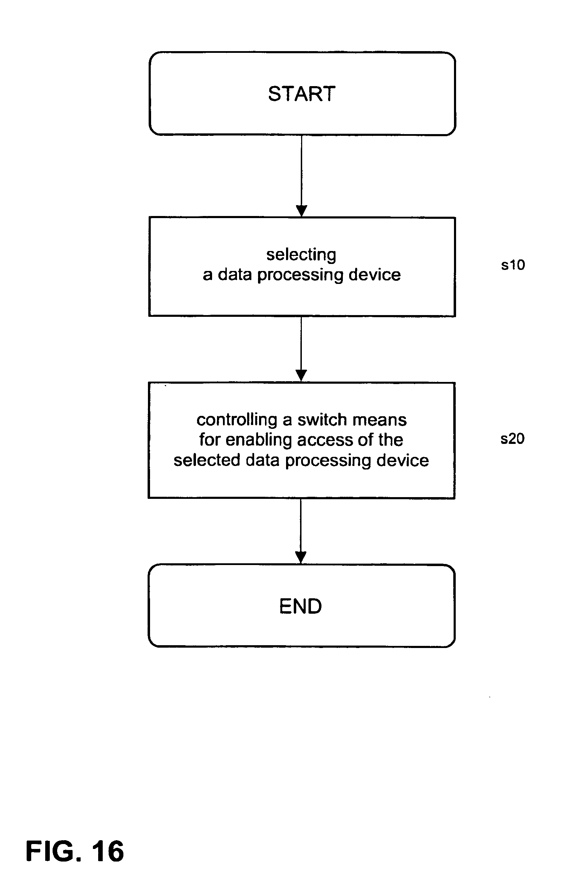

The operation of the data transfer interface of the present invention is described with reference to Fig. 16. In a first step S10, a data processing device of the plurality of data processing devices is selected. The selected data processing device is enabled to access data storage drive 130. This is achieved by controlling switch means 150 in step S20 such that an access of the selected data processing device to data storage drive 130 is enabled by the switch means. Specifically, switch means 150 is controlled such that signals may be transferred between the selected data processing device and data storage drive 130.

One of hard disk, a semiconductor disk or an optical drive - like a CD or a DVD drive - can be employed as data storage drive 130. Specifically an optical drive allows to supply data from different storage media in accordance with a respective operation to be carried out by one of the data processing devices.

A variety of data processing devices 110, 120 may be connected to the data transfer interface of the present invention for accessing the data storage drive. Such processing devices include general purpose processing units such as a CPU of an embedded system, and processing units dedicated to specific tasks, like encoders, decoders or video processors.

For instance, a first processing device 110 may perform control operations and obtain respective programs from a CD or DVD media inserted in data storage drive 130. Another data processing device 120 is capable of accessing video data and decoding the video data provided on the same or on another storage medium to be inserted into the storage drive 130.

In this exemplary configuration, the data processing devices 110, 120 are equipped with an interface connector according to the same data bus standard as data storage drive 130. The data storage drive is equipped with a standardized data bus interface, such as an ATA/ATAPI interface.

According to the ATA/ATAPI standard, a plurality of registers is provided on the data storage drive. These registers include a data register, a position register and a command register. An ATA/ATAPI data bus includes a plurality of signal lines connecting a host device, like a computer system and a data storage drive. Specifically, address signal lines are provide for addressing one of the registers, data signal lines are provided for transferring data to/from the respective register, and control signal lines control the reading and writing of a data.

As already mentioned, a communication session between a host computer and an ATAPI storage drive is carried out in several phases. Specifically, in a command phase, position information and a command is written to the respective register on the storage drive, thus initiating the data transfer. In the succeeding phase, data is transferred from/to the data storage drive in accordance with the before transferred command.

In a configuration, where the data transfer interface of the present invention is utilized for accessing data storage drive 130 in accordance with the ATA/ATAPI standard, preferably, the data processing devices 110, 120 are also equipped with a bus interface in accordance with the ATA/ATAPI standard. In such a configuration, signals exchanged between data storage drive 130 and one of the data processing devices can be transmitted via the data transfer interface without requiring a conversion.

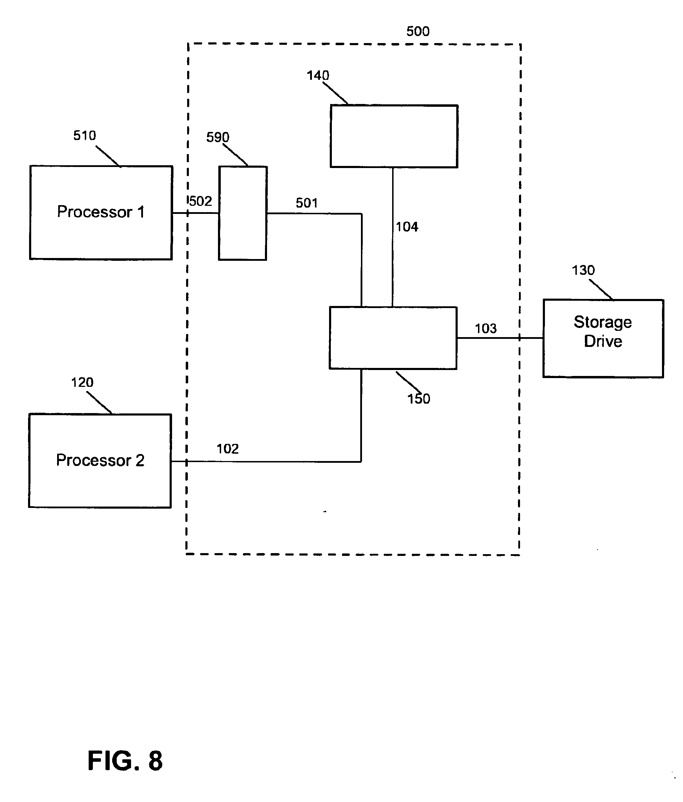

However, the present invention is not limited to configurations in which the data processing devices and the data storage drive are equipped with the same data bus interface. An exemplary configuration of the data transfer interface of the present invention connected to a data processing device not provided with the same data bus interface as data storage drive 130 is depicted in Fig. 8. In this Figure, a system configuration of data transfer interface 500 provided with an ATA/ATAPI converter is illustrated. The ATA/ATAPI converter 590 receives access signals from one of the data processing devices 510 via respective signal lines 502. ATA/ATAPI converter 590 performs a conversion of the access signals of the data processing device 510 into access signals in accordance with the ATAPI standard. A signal line 501 connects ATA/ATAPI converter 590 with switch means 150. Thus, data processing device 510 may access the data storage drive via ATA/ATAPI converter 590 and switch means 150. Data and drive control signals from the data storage drive 130 are converted by the ATA/ATAPI converter into signals in accordance with an interface provided on the processing device 510.

According to this configuration, data processing devices 510, 120 equipped with different data bus interfaces may access data storage drive 130 via the data transfer interface of the present invention.

According to a preferred configuration of the present embodiment, ATA/ATAPI converter 590 generates access signals in accordance with programmed input/output mode 4 (PIO mode 4) of the ATAPI standard. This access mode offers a high data transfer rate. Further, by utilizing only one of the data transfer modes according to the ATAPI standard, the complexity of ATA/ATAPI converter 590 becomes low.

The ATA/ATAPI converter provides access to the ATA/ATAPI drive registers via a specific address space of the ATA/ATAPI converter, the specific address space being mapped to the ATA/ATAPI drive registers. When a data processing device accesses this address space, the ATA/ATAPI converter transfers corresponding data to the ATAPI storage drive.

In addition, the ATA/ATAPI converter generates a specific interrupt signal for the data processing device in accordance with the ATAPI drive interrupt signal. For instance, if an Hitachi SH3 processor is utilized as one of the data processing devices, the interrupt IRQ3 of the SH3 processor may be allocated to the ATAPI drive interrupt.

The data transfer interface in accordance with the present embodiment of the invention allows a plurality of data processing devices to individually access a single data storage drive. Accordingly, each data processing device carries out data transfer operations in accordance with its own processing requirements.

The described feature is a particular advantage of the present invention, since none of the data processing devices performs ineffective operations such as accessing and transferring of data utilized by another data processing device. Thus, tasks running on a specific data processing device benefit from undiminished processing resources. In addition, only a single data storage drive is required for providing data storage facilities to the plurality of data processing devices.

In the following, the data transfer interface of the present invention is further specified by means of a second embodiment. The options, preferred configurations and advantages as yet described are also applicable to the data transfer interface of the second embodiment.

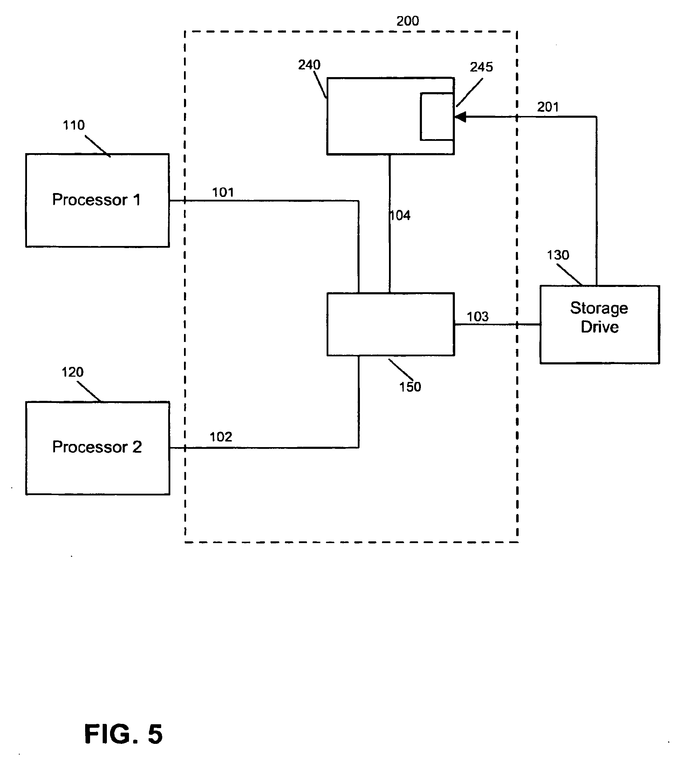

Fig. 5 shows a schematic configuration of a data transfer interface 200 in accordance with the second embodiment of the present invention. Similar to the first embodiment, plural data processing devices 110, 120 are connected to switch means 150. Further, data storage drive 130 is connected to the switch means. The switch means are controlled by control means 240.

Control means 240 comprises a drive status detector 245 for detecting an operation status of the data storage drive 130. This is achieved by supplying a control signal of the data storage drive 130 to the drive status detector 245 via signal line 201. Thus, the control means 240 may detect the operating status of the data storage drive and control the switch means 150 accordingly.

The drive status detector 245 detects whether or not a transfer of data is currently performed between one of the data processing devices and the data storage drive. For instance, an input/output-ready signal of the data storage drive may be employed to detect whether a data transfer has been completed and if the drive 130 is ready for another data transfer.

In accordance with the detection result, switch means 150 is controlled such that a transmission of signals between the data storage drive 130 and one of the data processing devices 110, 120 is only switched when no data transfer is currently performed.

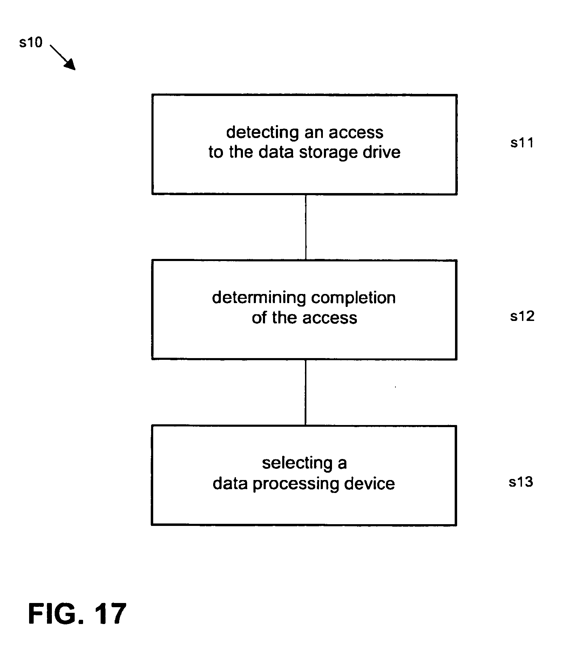

The operation of the data processing device of the present embodiment is illustrated in Fig. 17. Before a data processing device is selected and the switch means are controlled in order to enable access of the selected data processing device to data storage drive 130, it is detected whether an access is currently performed. Only when the access is completed, another data processing device is selected in step S13 and switch means 150 is controlled accordingly.

In a preferred system configuration, wherein the data storage drive is accessed in accordance with the ATA/ATAPI standard, a transfer operation, comprising the initializing of the data storage drive and the actual transferring of data, is completed before another data processing device is allowed to access the data storage drive. However, it is also possible to terminate the transfer operation after the initialization step and to re-initialize the data storage drive. Preferably, a drive reset is performed in such a case to reset the data storage drive 130 to an initial status.

The data transfer interface in accordance with the second embodiment of the present invention reliably allows plural data processing devices to carry out data transfer operations utilizing a single data storage drive. Specifically, the data transfer interface ensures that data transfer operations are completed, such that no error due to interrupted transfer operations or interference between the data processing devices occur.

A further specification of the data transfer interface of the present invention illustrated in the previous embodiments is now presented in a third embodiment of the present invention. The options, preferred configurations and advantages as yet described are also applicable to the data transfer interface of the third embodiment.

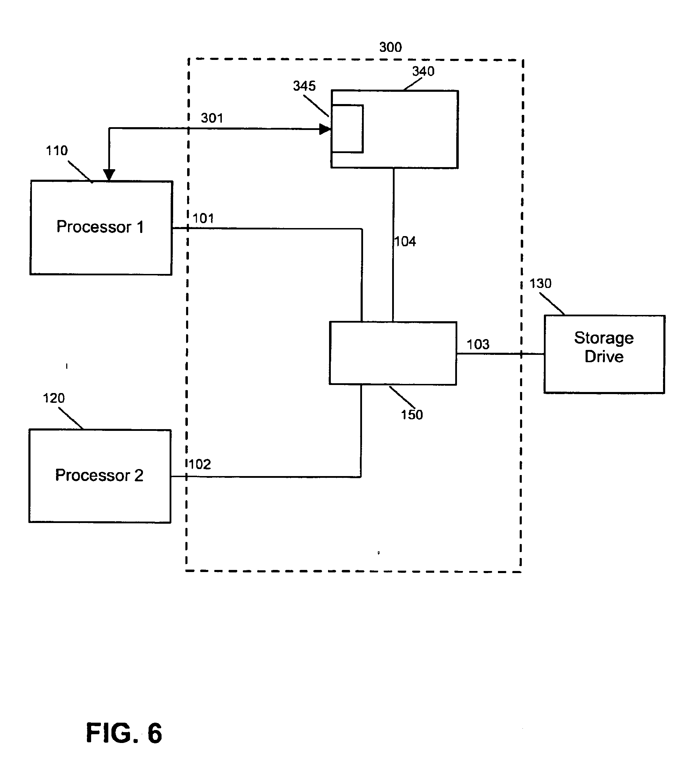

Fig. 6 illustrates a data transfer interface 300 providing plural data processing devices 110, 120 with access to data storage drive 130, similar to the first and second embodiment of the present invention. The data transfer interface 300 comprises a switch means 150, same as the switch means described in embodiments 1 and 2. The control means 340 differs from the control means described so far in that the control means 340 is further equipped with a communication means 345 for exchanging control signals with at least one of the data processing devices. A control signal line 301 is provided between a first data processing device 110 and communication means 345. Control means 340 controls switch means 150 in accordance with control signals exchanged with data processing device 110.

Data processing device 110, for instance, provides a control signal to control means 340 when it has completed the data transfer operation. Thus, similar as described in the second embodiment of the present invention, control means 340 detects a completion of an access by a data processing device and another data processing device is allowed to access the data storage drive only after the termination of a data transfer operation by the data processing device 110 is detected.

The control means may also provide a data processing device with an access permission signal, indicating that the respective data processing device is enabled to access data storage drive 130 via switch means 150. The data processing device provided with the access permission signal only accesses the data storage 130 drive after receiving such an access permission signal. Thus, the data processing device does not need to carry out unnecessary access attempts until an access to the data storage drive is enabled by switch means 150. Instead, the data processing device may suspend any data transfer operation until receiving the access permission signal.

Optionally, the control means provides a data processing device with an access termination signal via the communication means 345. Upon receiving the access termination signal, the data storage drive terminates its access to the data storage drive. Thus, when the necessity arises to enable a processing device other than the processing device currently performing a data transfer to access the data storage drive, a data processing device may be prompted to terminate its current data transfer operation. Accordingly, an occupation of the data storage drive by one data processing device over a long period of time can be avoided.

Specifically, a data processing device performing an access in accordance with the ATA/ATAPI standard is preferably allowed to complete a current data transfer operation which comprises the initialization of the drive and the transferring of data. Thus, a switching process of the switch means is performed when the data storage drive is ready for another data transfer operation.

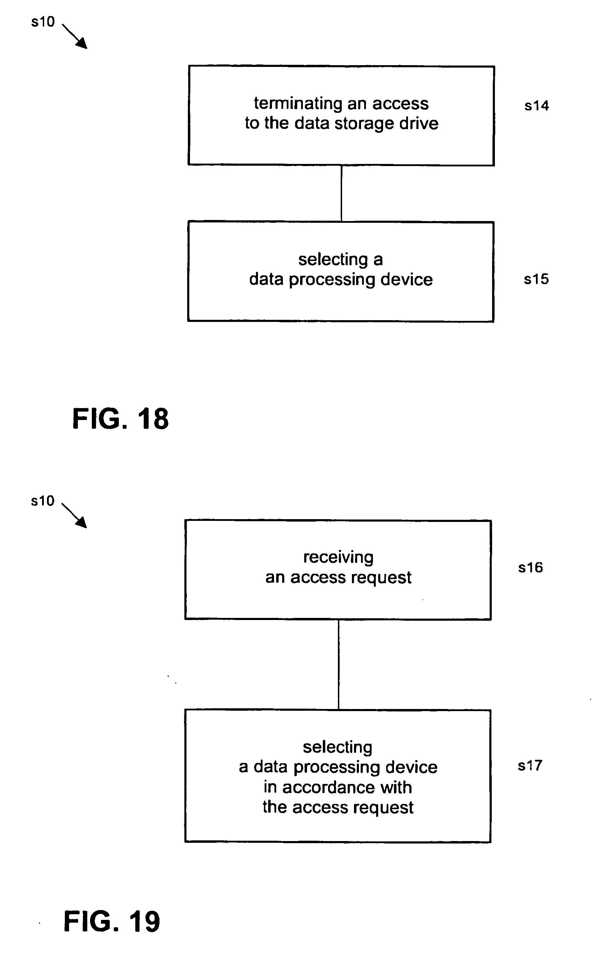

Such an operation of the data transfer interface is illustrated in the flowchart of Fig. 18. In step S14, a data storage drive is prompted to terminate its access to the data storage drive. In the'following step S15, another data processing device is selected to access the data storage drive.

Control means 340 may optionally receive an access request from one of the plurality of data processing devices 110, 120 and controls switch means 150 in accordance with that access request. For instance, a data processing device may require access to the data storage drive regularly in order to obtain new commands or software updates. By issuing access requests, the data processing device can be reliably provided with data from the data storage drive every time a task carried out on that data processing device demands to obtain further data from the storage drive.

That operation is depicted in the flowchart of Fig. 19. After an access request has been received in step S16, the selection of a data processing device to access the data storage drive is carried out by the control means 340 in accordance with the access request.

Preferably, control means 340 comprises an access request queue in order to sequentially handle access requests of a plurality of data processing devices. In a further preferred configuration, it is also possible to assign a priority to each access request and to handle plural access requests in accordance with the priority assigned thereto. For example, the priority can be assigned in accordance with a priority value attributed to each processing device. Alternatively, each processing device may assign an individual priority to each access request it generates.

According to an exemplary operation of the data processing device of the present embodiment, a data processing device to access data storage device 130 is newly selected after the lapse of a predetermined time interval and switch means 150 is controlled for enabling the selected data processing device to access the data storage drive. Thus, each data processing device may access the data storage drive for a predetermined time interval. After that, another data processing device may be selected to access the data storage drive. Thus, it is possible to assign a certain access time to each of the data processing devices. Preferably, within a certain time interval, each of the processing devices is given the opportunity to access the data storage drive.

According to another exemplary operation of the data processing device of the present embodiment, a data processing device allowed to access data storage drive 130 may carry out a predetermined number of transfer operations. After the predetermined number of transfer operations have been completed, another of the data processing devices is selected to access the data storage drive. Further, each of the data processing devices can be assigned with an individual number of transfer operations it is allowed to perform. In this manner, the bandwidth of a data bus interface of the data storage drive may be distributed among the data processing devices with high flexibility.

It is also possible to provide control means 340 with a data processing device designation signal in order to designate one of the plural data processing devices to access the data storage drive. In compliance with the data processing device designation signal, the control means 340 controls switch means 150 in order to enable the designated data processing device to access data storage drive 130.

The data processing device designating signal is preferably generated by a user interface. A user may for instance input a command to carry out a specific data processing operation. In accordance with the requested data processing operation, a specific data processing device requires access to the data storage drive 130. The respective data processing device is indicated by the data processing device designation signal issued by the user interface.

The options described in the present embodiment of the invention can be combined. A data processing device is e.g. provided with an access permission signal as soon as an access of a data processing device to data storage drive 130 is enabled by switch means 150. Before switch means 150 is controlled to enable another data processing device to access data storage drive 130, the currently selected data processing device is prompted to terminate its access to data storage drive 130. The selection of another data processing device may be performed in accordance with an access request of a data processing device or in accordance with a data processing device designation signal. Further, control means 340 may terminate an access of a data processing device to data storage drive 130 after a predetermined time interval or after a predetermined number of data transfer operations.

It is apparent from above example, that the present invention provides a plurality of control options for flexibly controlling the behavior of the data transfer interface of the present invention.

In the following, a fourth preferred embodiment of the present invention is described. In the fourth embodiment the data transfer interface described in the first to third embodiment of the present invention is further specified. Accordingly, the options, preferred configurations and advantages as yet described are also applicable to the data transfer interface of the fourth embodiment.

In accordance with the fourth embodiment of the present invention, the control means comprises a control unit for designating a single one of the plurality of data processing devices being permitted to access data storage drive 130.

The control unit designates a data processing device in accordance with the request from one of the data processing devices. Alternatively, the control unit may select the data processing devices sequentially such that the data processing devices may, one after another, access the data storage drive. However, the control unit may also designate one of the data processing devices in accordance with a designation signal from a user interface.

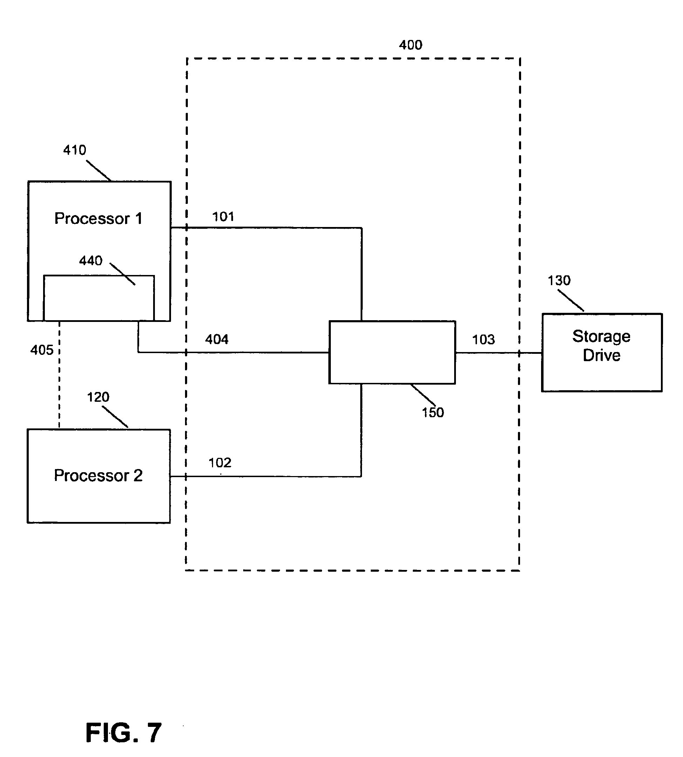

A preferred configuration of the fourth embodiment is illustrated in the schematic interface diagram shown in Fig. 7. According to this configuration, control unit 440 is part of the one of the data processing devices 410, 120. Thus, one of the data processing devices is employed for controlling the switch means. Control unit 440 directly controls switch means 150 which enables the data processing devices to access the data storage drive. In this manner, the hardware complexity of the data transfer interface becomes very low.

In this configuration, control unit 440 is part of a first data processing device 410. The control unit is further equipped to control a second data processing device 120. To this end, a control signal line 405 is provided between control unit 440 and data processing device 120.

The second data processing device can be controlled by activating or deactivating the operation of the data processing device. Alternatively, only a storage drive accessing functionality of second data processing device 120 is controlled by control unit 440. For instance, access permission signals or access termination signals as described in the third embodiment of the present invention may be utilized in order to effect such a control.

Thus, one of the data processing devices 410 may efficiently and flexibly control switch means 150. Further, data processing device 410 comprising control unit 440 may assign an access permission to itself or to another one of the data processing devices accessing data storage drive 130. Thus, an efficient control of system components of a system comprising the data transfer interface of the present invention is achieved.

Although in the described configuration control unit 440 directly controls switch means 150, the control means may further comprises a switch controller in order to control switch means 150 in accordance with a signal issued by control unit 440 which designates a data processing device.

In the following, a fifth embodiment of the present invention is described. The fifth embodiment further specifies the data transfer interface described in the first to fourth embodiment of the present invention. Consequently, the options, preferred configurations and advantages as yet described are also applicable to the data transfer interface of the fifth embodiment.

According to the fifth embodiment of the present invention, switch means 150 is equipped with a buffer for holding data transmitted to the data processing devices or data transmitted from the data processing devices. The buffer is connected to each of the data processing devices and to the data storage drive 130.

In the following, an exemplary operation of a switch means comprising such a buffer is described. An access request issued by one of the data processing devices is stored in the buffer at a predetermined buffer address. If the data processing device issuing the access request is currently not allowed to access the data storage drive, the access request is held in the buffer. As soon as the data processing device is permitted to access the data storage drive, the access request is read from the buffer and transmitted to the data storage drive 130. At the data storage drive 130, the access request is carried out. Accordingly, data to be written to the data storage drive 130 are accepted or data to be read from the data storage drive are transferred to the buffer and forwarded to the respective data processing device. During that time, access requests from other data processing devices may be stored in the buffer and held therein. Accordingly, access requests from different data processing devices do not interfere with each other.

The buffer sequentially reads out its data interfaces connected to the plural processing devices in order to check whether any of the processing devices issues an access request. For instance, the buffer may schedule such access requests in a queue and carry out the access requests stored in the queue one by one.

Plural memory sections are provided within the buffer, each corresponding to one of the data processing devices. An access request of a first data processing device is written to a respective buffer section. In accordance with a queue control, the access request is read out and sent to the data storage drive. The answer of the data storage drive, e.g. a certain amount of data read out in accordance with the access request, is transferred to the buffer and stored in the corresponding buffer section. At a later time, when the buffer again addresses that buffer section, the data received from the data storage drive is read out and transferred to the data processing device. In order to perform such an operation, the buffer independently communicates with the data processing devices and with the data storage drive.

Accordingly, only one host, namely the buffer, accesses the data storage drive, thus avoiding any collisions of data transferred to/from the data storage drive. Further, each of the data processing devices accesses the buffer in place of the data storage drive, and the buffer coordinates and queues the access requests from the data processing devices.

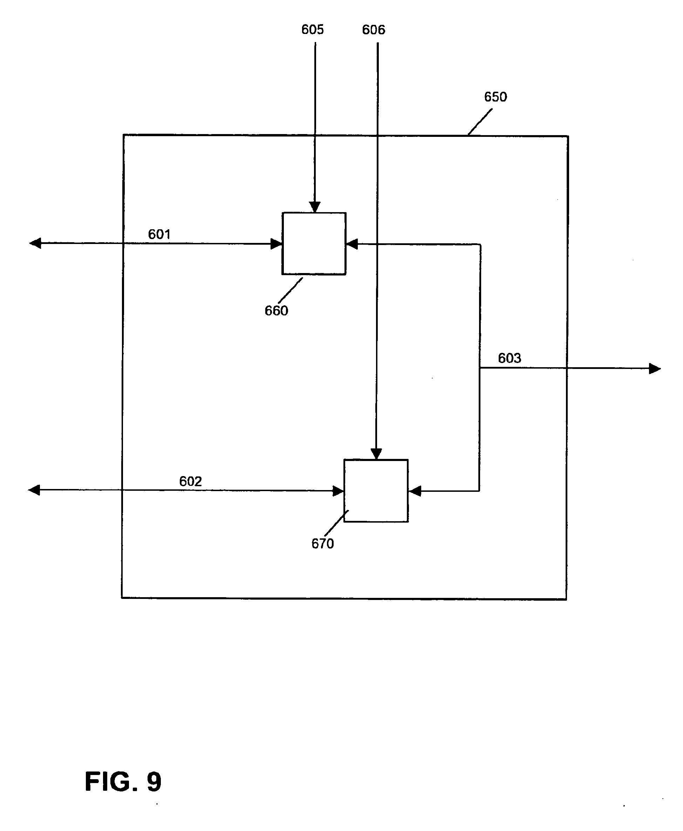

A sixth preferred embodiment of the present invention is now described while referring to Fig. 9. The sixth embodiment of the present invention further specifies the configuration of a switch means of the data transfer interface of the present invention described in the first to fourth embodiment. Accordingly, the options, preferred configurations and advantages as described in the first to fourth embodiment are also applicable to the data transfer interface of the sixth embodiment.

Fig. 9 depicts the configuration of switch means 650 according to the sixth embodiment. The switch means comprises a first switch 660. This switch is connect to a first data processing device via signal lines 601. A second switch 670 is connected to a second data processing device by a signal line 602. In this configuration, a switch means connected to two data processing devices is described. However, the present invention is not limited to be connected to two data processing devices. By providing further switches, a larger number of data processing devices may be connected to the switch means 650.

Specifically, one of switches 660, 670 is connected to each of the data processing devices by a respective signal line 601, 602. The switches 660 and 670 are jointly connected to the data storage drive by signal line 603. Control signals from the control means are provided to control switches 660, 670 in such a manner that the transmission of signals between signal lines 601, 602 and signal lines 603 is enabled or disabled. Specifically, the switches are controlled such that only one of switches 660, 670 allows a transmission of signals. Preferably, a separate control signal line 605, 606 is provided for the control of each of the switches.

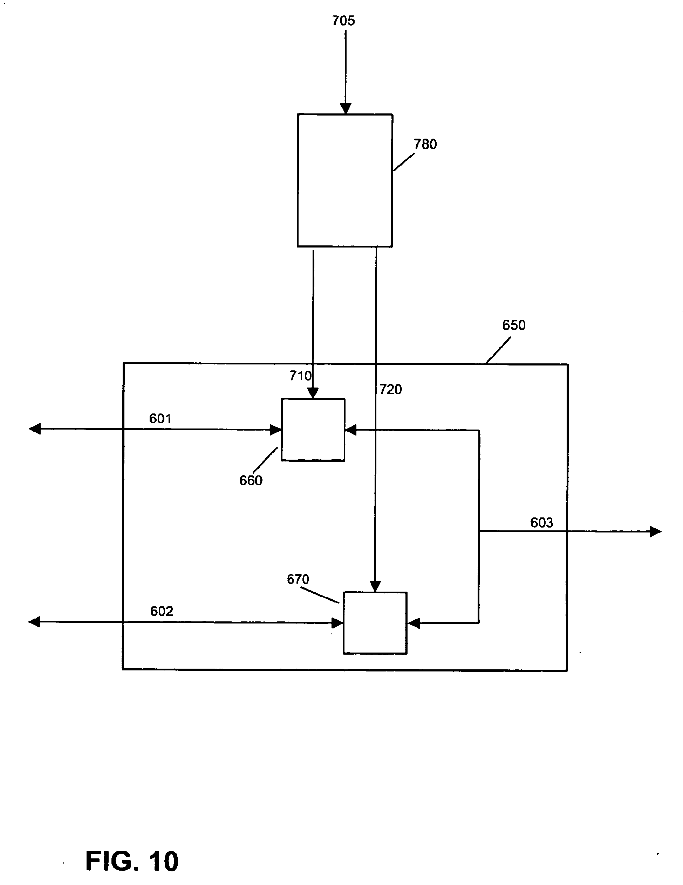

An exemplary configuration of a control means for controlling the switches is illustrated in Fig. 10. Switch means 650 depicted in Fig. 10 has the same configuration as the switch means above described with reference to Fig. 9. Specifically, a number of switches 660 and 670 are provided, wherein each switch 660, 670 is connected to an individual one of the data processing devices. The control means of the present configuration includes switch controller 780 for controlling switches 660, 670. The switch controller activates only one of switches 660, 670 in order to enable a transmission of signals via the activated switch, all other switches are deactivated.

Switch controller 780 receives a signal designating the data processing device being allowed to access data storage drive 130. In accordance with the data processing device designation, switch controller 780 generates switch control signals 710, 720 in such a manner that only the switch connected to the designated data processing device becomes activated.

Thus, the present invention efficiently provides a data transfer interface enabling only one of the data processing devices to access a data storage drive at a time. Specifically, the data transfer interface reliably prevents signals of separate data processing devices interfering with each other.

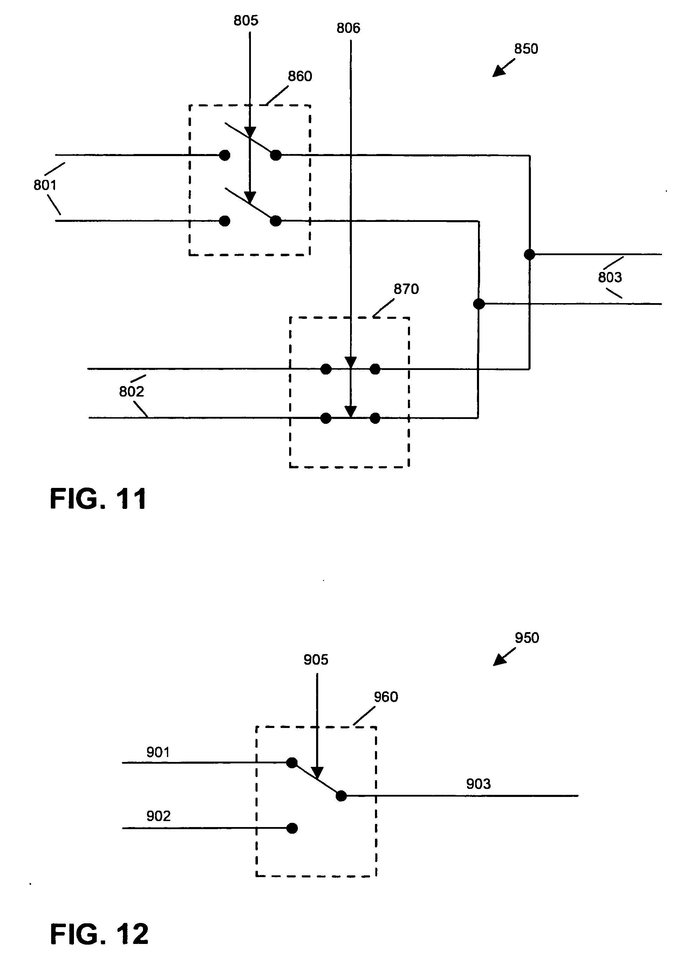

An exemplary configuration of the switch means of the present embodiment is illustrated in Fig. 11.

Each switch 860, 870 comprises itself plural switches for enabling or disabling the signal transmission on plural signal lines 801, 802 connected to a specific data processing device and signal lines 803 connected to the data storage drive. In case an ATA/ATAPI drive is employed, a plurality of data signal lines, address signal lines and control signal lines are employed as already described in the first embodiment.

The switches connected to signal lines 801 or 802 of the same data processing device are jointly controlled by a control signal line 805 or 806.

In the described configuration, an electrical connection is established between signal lines 803 of the data storage drive and signal lines 801 or 802 of a data processing device. Accordingly, the switches 860, 870 may include any type of semiconductor switches or mechanical switches controllable in the described manner.

However, the data transfer interface of the present invention is not limited to establishing an electrical connection on signal lines between a data processing device and the data storage drive. For instance, switches 660, 670 enable or disable a transfer of signals without providing an electrical connection between signal lines of the data processing devices and signal lines of the data storage drive. For this purpose, optoelectronic couplers can be employed.

Another option is to provide each switch 660, 670 with a controllable buffer for holding and transmitting data on the signal lines in accordance with a respective control signal.

As illustrated in Fig. 12, the switch means may also be provided with a selector switch. Selector switch 960 establishes an electrical connection between one of the signal lines 903 connected to the data storage drive and signal lines 901, 902 connected to different data processing devices. Preferably, interrupt signals or status signals from the data storage drive are provided to a selected one of the data processing devices by such a selector switch 960.

An exemplary configuration of an information and entertainment system is described by means of a seventh embodiment of the present invention. The information and entertainment system employs the data transfer interface as described throughout the first to sixth embodiment of the present invention.

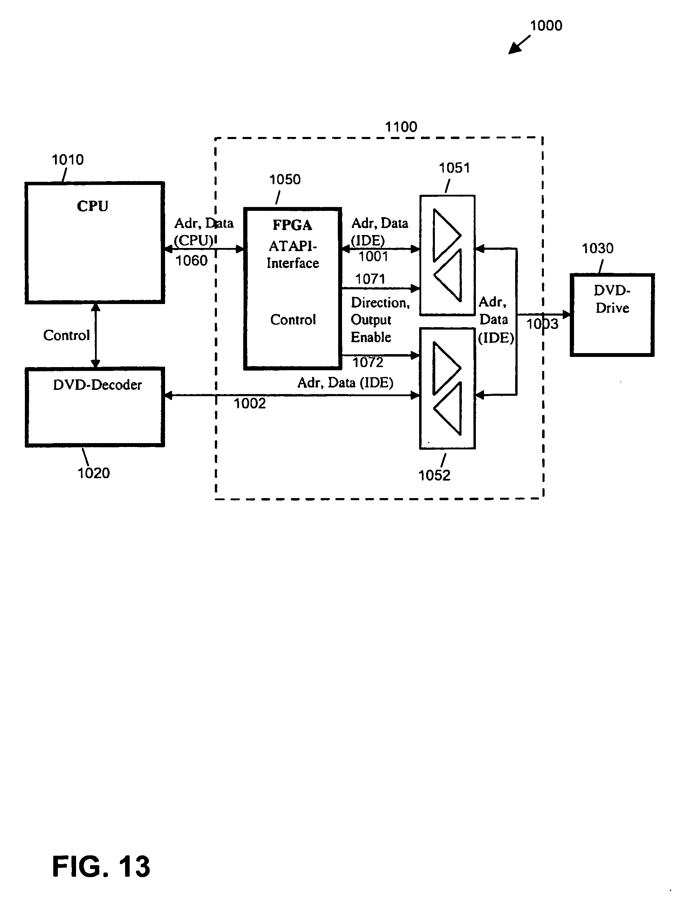

Fig. 13 depicts an exemplary configuration of such an information and entertainment system 1000 employing the data transfer interface of the present invention. A central processing unit 1010 and an auxiliary processing unit 1020 are connected to the data transfer interface 1100 of the present invention in order to access a data storage drive 1030.

Central processing unit 1010 controls the information and entertainment system 1000 and performs a variety of tasks such as providing a user interface of the information and entertainment system. Other tasks may include providing an e-mail client, a picture viewer, video games, a car navigation software and the like. The auxiliary processing unit 1020 performs a specific processing operation being advantageously carried out by a data processing unit optimized for such an operation.

For instance, the auxiliary processing unit 1020 carries out a decoding of encoded video data. Such video data is usually encoded and stored in a format according to the MPEG standard or according to the DivX specification. Since decoding such video data by the central processing unit 1010 would demand a high computation performance of the central processing unit 1010, these tasks are performed by the auxiliary processing unit 1020. Therefore, a less expensive central processing unit of lower computing power may be utilized. In addition, central processing unit 1010 may perform separate tasks while video data being decoded.

The information and entertainment system 1000 is suitable to be utilized within a vehicle. Specifically for such an application of the information and entertainment system 1000, the central processing unit is equipped to run a vehicle navigation software. As a data storage drive, a DVD drive is employed. The central processing unit accesses the DVD drive in order to read navigation information, like roadmaps, or software for a system update provided on a respective DVD storage medium.

It is a particular advantage of the present invention that the central processing unit 1010 and the auxiliary processing unit 1020 may independently access the DVD storage drive. Specifically, the central processing unit 1010 does not have to perform an access and transfer operation in order to provide the auxiliary processing unit 1020 with data stored on the DVD drive 1030. Consequently, the central processing unit 1010 may employ all its processing resources for tasks like system control and car navigation. Further, it is not necessary to provide a separate data storage drive for each of the central processing unit 1010 and the auxiliary processing unit 1020. Thus, a cost and a space efficient vehicle information and entertainment system is provided.

The auxiliary processing unit 1020 in this configuration is a DVD decoding unit for accessing a DVD drive, performing file navigation on a DVD storage medium storing video data and decoding of the stored video data.

Such a DVD decoding unit is provided with a DVD file navigation software. Consequently, the DVD decoding unit is fully equipped for accessing a DVD storage medium storing video data and the like. Therefore, no development effort is required for developing a DVD navigation software. In contrast, in a conventional design, wherein a central processing unit performs the data transfer between a data storage drive and an auxiliary DVD decoding unit, a complex DVD file navigation software has to be developed for the central processing unit, if it is desired to access the DVD storage media.

In the following, an exemplary configuration of the data transfer interface 1100 of the present invention to be employed with information and entertainment system 1000 is described.

The data transfer interface 1100 includes a switch means consisting of two switches 1051 and 1052. The switches comprise buffers for transferring data on signal lines between the DVD drive 1030 and respective processing units 1010, 1020. Control means are provided as part of central processing unit 1010, which designates the data processing device allowed to access DVD drive 1030. If, for instance, new car navigation data or new system software is to be read from DVD drive 1030, central processing unit 1010 is designated for accessing DVD drive 1030. On the other hand, if a movie from a DVD disk is to be reproduced, DVD decoding unit 1020 is designated for accessing DVD drive 1030.

The data transfer interface 1100 further includes an interface controller 1050. This interface controller 1050 is equipped with a switch controller for controlling individual switches 1051 and 1052. Further, interface controller 1050 also includes an ATA/ATAPI converter for converting access signals of central processing unit 1010, transmitted via signal lines 1060, into access signals in accordance with the ATA/ATAPI standard.

Interface controller 1050 is implemented as a field programmable gate array device (FPGA). The FPGA interface controller includes all hardware components of data transfer interface 1100 except the switches 1051 and 1052. Together with central processing unit 1010, the FPGA interface controller 1050 efficiently controls data transfer interface 1100. The FPGA interface controller 1050 specifically includes the switch controller and the ATA/ATAPI converter in a single device. In consequence, a high integration density of the interface components is achieved. It is a further advantage, that interface controller 1050 can be efficiently produced as FGPA device in small series.

In the case when central processing unit 1010 accesses DVD drive 1030, the operation of DVD decoding unit 1020 is suspended by means of a respective control signal line from central processing unit 1010. Further, a data processing device designation signal is provided to the interface controller 1050 in order to control the switch controller therein. Accordingly, the switch controller activates switch 1051 such that data between central processing unit 1010 and DVD drive 1030 can be transmitted. Further, switch 1052 becomes disabled, such that no signals may be transmitted between DVD decoding unit 1020 and DVD drive 1030. Thus, the access of central processing unit 1010 to DVD drive 1030 is not interrupted by any signals from DVD decoding unit 1020. Access signals of central processing unit 1010 are transferred to interface controller 1050 which converts the signals into signals in accordance with ATA/ATAPI standard. These signals are transferred to DVD drive 1030 via switch 1051.

Switches 1051 and 1052 are provided with buffers for transmitting the signals on the signal lines 1001, 1002, 1003. Direction control signals 1071, 1072, as will be explained later, are provided to switches 1051 and 1052 in order to determine the direction of data to be transferred.

When DVD decoding unit 1020 is to access DVD storage drive 1030, the DVD decoding unit receives a respective control signal from central processing unit 1010. The central processing unit further provides a designation signal to interface controller 1050 for designating the DVD decoding unit 1020 to access the DVD drive 1030. In accordance therewith, the switch 1051 is disabled and the switch 1052 is activated in order to allow a transmission of data between DVD decoding unit 1020 and DVD drive 1030. DVD decoding unit 1020 now is able to access the data stored on DVD drive 1030.

In this exemplary configuration, DVD decoding unit 1020 is a commercially available semiconductor device, such as the ST5508 device. Such devices are efficiently produced in high numbers to be employed in consumer video devices such as DVD players. Therefore, these decoding devices can be cost efficiently obtained. Due to the present invention, such devices can be efficiently integrated in a vehicle information and entertainment system.

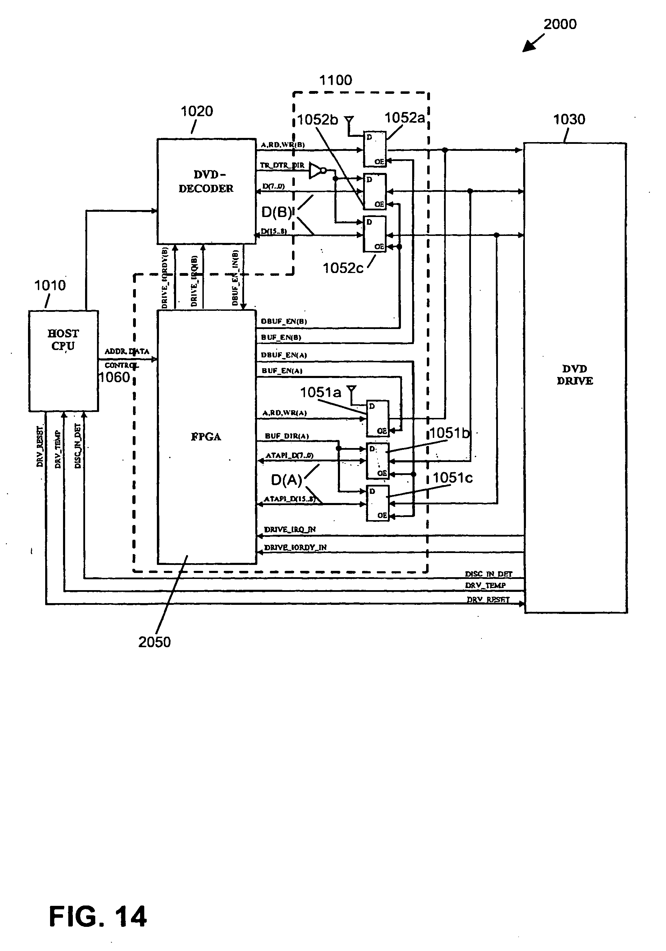

In the following, the system configuration of the vehicle information and entertainment system described in the seventh embodiment of the present invention is further specified in an eighth embodiment of the present invention. Fig. 14 illustrates the vehicle information and entertainment system 2000 of this exemplary embodiment in more detail.

As central processing unit 1010, an embedded processing system is employed. Examples of such embedded systems are the SH3 or the ARM processors. For auxiliary processing unit 1020, a standard consumer device DVD decoding unit is employed, as above described.

Switch 1052 which is arranged between decoding unit 1020 and DVD drive 1030 comprises three buffers 1052a, 1052b and 1052c. DVD decoding unit 1020 is preferably equipped with an ATAPI interface. Also DVD drive 1030 is equipped with an ATAPI interface. A first buffer 1052a is connected between address signal lines and read/write control lines A,RD,WR(B). Two further buffers 1052b, 1052c are employed for transmitting signals on data signal lines D(B).

The buffers 1052a, 1052b, 1052c are equipped with an output enable control input OE. Control signals BUF_EN(B), DBUF_EN(B) are provided to output enable control inputs OE by interface controller 2050 in order to control the data transfer via the buffers. Specifically, buffers 1052a, 1052b, 1052c only output data to be transferred on the signal lines A,RD,WR(B) and D(B) when they are provided with the respective control signal at their output enabling control input OE.

The buffers 1052a, 1052b, 1052c are further equipped with a direction control input for controlling the direction of data transferred on the signal lines. Buffer 1052a is such configured that signals A,RD,WR(B) are always transmitted from the DVD decoder to the DVD drive. The transfer direction of data via buffers 1052b, 1052c connected to the data signal lines D(B) is controlled by signal TR_DTR_DIR from DVD decoder unit 1020.

Similarly, a second set of buffers 1051 a, 1051b and 1051c is provided for connecting an ATA/ATAPI converter provided within the interface controller 2050 to DVD drive 1030. The configuration of these buffers corresponds to the configuration of buffers 1052a-c described above. A first buffer 1051 a is provided for address, read and write signals A,RD,WR(A) and two further buffers 1051 b and 1051 c are provided for data signal lines D(A).

Buffers 1051 a, 1051b and 1051c connected to the ATA/ATAPI converter enable or disable the data transfer between central processing unit 1010 and DVD drive 1030. These buffers are controlled by interface controller 2050 via the control signal lines BUF_EN(A) and DBUF_EN(A) connected to an output enabling control input OE of buffers 1051 a, 1051 b, 1051 c.

From the interface controller 2050 further direction control signal lines BUF_DIR(A) are provided for controlling the direction of signals transferred by buffers 1051b and 1051 c connected to data signal lines D(A).

On the side of DVD drive 1030, signal lines from buffers 1051 a-c and 1052a-c are jointly connected to the ATAPI interface of DVD drive 1030.

Drive control signals from DVD drive 1030 are provided to the data processing device allowed to access the DVD drive. These signals include a drive interrupt signal DRIVE_IRQ_IN for controlling a data access operation and a drive in/out ready signal DRIVE_IORDY_IN for indicating when the data storage drive accepts another data transfer. Specifically, these signals are either provided to DVD decoding unit 1020 - as signals DRIVE_IRQ(B), DRIVE_IORDY(B) - or to the ATA/ATAPI converter of interface controller 2050.

The ATA/ATAPI converter converts such signals and provides the signals to central processing unit 1010. Further drive control signals, like a medium detection signal DISC_IN_DET and a drive temperature signal DRV_TEMP, are provided to central processing unit 1010. The central processing unit also provides a drive reset signal DRV_RESET to DVD drive 1030 for resetting the DVD drive to as initial status.

Accordingly, a control unit which is part of central processing unit 1010 may efficiently and reliably control an access of auxiliary processing unit 1020 or central processing unit 1010 to DVD drive 1030. The provision of switch means 1051 a-c and 1052a-c ensures that no interference between the plural processing units 1010 and 1020 occurs during a data transfer.

Generally speaking, it is another advantage of the data transfer interface of the present invention, that signals from the data storage drive causing an interruption of the data processing of the data processing devices are only provided to the data processing device accessing the data storage drive. Therefore, no unnecessary interruption is caused to a data processing device currently not accessing the data storage drive.

Specifically, tasks performed on central processing unit 1010 are not interrupted while DVD decoding unit 1020 accesses DVD storage drive 1030, since the drive interrupt signal DRV _IRQ_IN is only provided to DVD decoding unit 1020 at that time.

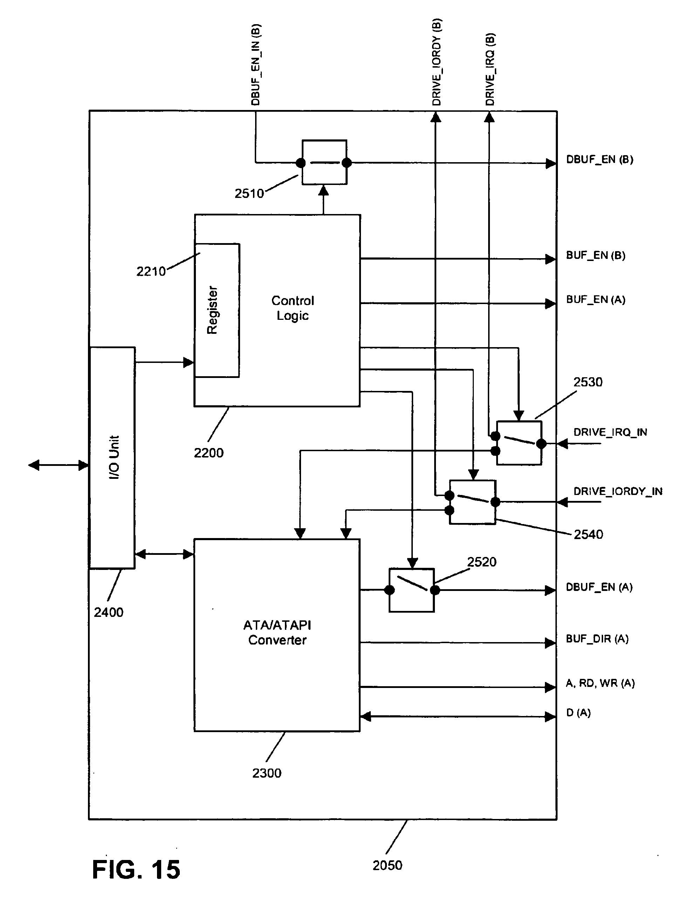

An exemplary configuration of interface controller 2050 is schematically depicted in Fig. 15. Preferably, interface controller 2050 comprises a control logic 2200 for controlling buffers 1051 a-c and 1052a-c and for controlling the switching of the described drive control signals DRIVE_IRQ_IN and DRIVE_IORDY_IN. The interface controller 2050 further comprises an ATA/ATAPI converter 2300 for converting the access requests of central processing unit 1010 into access request in accordance with the ATAPI standard. An input/output unit 2400 of interface controller 2050 receives access signals and control signals from central processing unit 1010 and provides these signals either to control logic 2200 or to ATA/ATAPI converter 2300.

Specifically, access signals from the central processing unit 1010 are provided to the ATA/ATAPI converter which accesses DVD drive 1030 via control signals lines A,RD,WR (A) and data signals lines D(A). Further, it is preferred that the ATA/ATAPI converter also generates a direction control signal BUF_DIR(A) for controlling the direction of the data transfer by buffers 1051b and 1051 c. Preferably, when central processing unit 1010 is an embedded SH3 processor, the DVD drive interrupt signal DRIVE_IRQ_IN is converted into an interrupt IRQ3 of the SH3 processor.

Preferably, the ATA/ATAPI converter provides access to the ATA/ATAPI drive registers via a specific address space of interface controller 2050, the specific address space being mapped to the ATA/ATAPI drive registers. When a data processing device accesses this address space, the ATA/ATAPI converter transfers corresponding data to the ATAPI storage drive.

Further provided within interface controller 2050 are switches 2510 and 2520 enabling or disabling a transmission of an enabling control signal DBUF_EN(A) and DBUF_EN(B) to buffers 1051 b, 1051 c and 1052b, 1052c respectively. The enabling control signals DBUF_EN(A) and DBUF_EN(B) are generated by host devices such as the DVD decoding unit in order to control buffers provided on data signal lines of an ATA/ATAPI bus.

Preferably, further selector switches 2530 and 2540 are provided in order to provide the drive control signals DRIVE_IRQ_IN and DRIVE_IORDY_IN to either DVD decoding unit 1020 - as signals DRIVE_IRQ(B), DRIVE_IORDY(B) - or to ATA/ATAPI converter 2300.

The control logic 2200 controls the buffers 1051 a and 1052a via signal lines BUF_EN(A) and BUF_EN(B). Further, the control logic 2200 controls the switches 2510, 2520 switching enabling control signals DBUF_EN(A) and DBUF_EN(B). In addition, selector switches 2530, 2540 designating the destination of the drive control signals are controlled by control logic 2200.

However, the switches 2530 and 2540 do not need to be implemented as selector switches but can comprise another arrangement of switches that can be controlled so as to provide only one of the data processing devices with the respective drive control signals. For example, two switches can be employed instead of a selector switch, wherein the two switches being connected to different data processing devices on one side and the switches being jointly connected to the data storage drive on the other side.

The control logic 2200 comprises a register 2210 wherein central processing unit 1010 writes data indicating which of the data processing devices 1010, 1020 may access data storage drive 1030. In accordance with the data in register 2210, the buffer control signals BUF_EN(A), BUF_EN(B) are generated. Further, control signals for switches 2510, 2520, 2530 and 2540 within the interface controller 2050 are generated.

If DVD decoding unit 1020 is selected to access DVD drive 1030, a switch status as shown in Fig. 15 is effected. Specifically the drive interrupt signal and the drive in/out ready signal are provided to DVD decoding unit 1020 via switches 2530 and 2540. Further, an enabling control signal DBUF_EN(A) from the ATA/ATAPI converter is not transmitted by switch 2520 while an enabling control signal DBUF_EN(B) from DVD decoding unit 1020 is transmitted by switch 2510. The buffer control signal BUF_EN(B) is set such that buffer 1052a is enabled to transfer data. Consequently, control signal BUF_EN(A) is set such that buffer 1051a is disabled.

In case central processing unit 1010 is enabled to access data storage drive 1030, the status of the switches and of buffer control signals above described is reversed.

The information and entertainment device of the present invention advantageously employs the data transfer interface of the present invention for providing a plurality of data processing devices with individual access a data storage drive.

Compared to a single processor computer system, a more economic central processing unit may be employed in the information and entertainment system of the present invention. For such tasks as accessing and decoding encoded video data, designated decoding devices of high efficiency are commercially available at comparatively low prices. In consequence, such processing units are advantageously employed as auxiliary processing unit.

In contrast to another conventional system, wherein a central processing unit carries out data access operations for supplying data from a data storage drive to the auxiliary processing unit, the information and entertainment system of the present invention achieves a higher efficiency in the utilisation of processing resources. It is a particular advantage of the present invention that each processing unit individually accesses the data storage drive without dissipating processing resources of the central processing unit. Thus, the computation power requirements for the central processing unit are lower.

Compared to another conventional solution, wherein a separate data storage drive is provided for each of the data processing units, the present invention provides a system which is more cost and space efficient since a single data storage drive provides data storage facilities to each of plural data processing devices.

Summarising, a data transfer interface is provided which enables access of a plurality of data processing devices to a single data storage drive. The data processing device comprises a switch means connected to each of the plurality of data processing devices and to the data storage drive. A control means controls the switch means such that only a single one of the data processing devices accesses the data storage drive at a time.

In consequence, each data processing device may individually access a data storage drive. In particular, a high processing efficiency of the data processing devices is achieved, since none of the data processing devices employs its processing resources for inefficient tasks such as transferring data between the data storage drive and another data processing device.

It is another advantage of the data transfer interface of the present invention that an access of each data processing device to the data storage drive is reliably carried out without an interference of signals from different data processing devices. In addition, control signals from the data storage drive interrupting the processing flow of a data processing unit are only provided to the data processing unit accessing the data storage drive. Thus, the data processing devices not currently accessing the data storage drive perform their respective tasks without unnecessary interruption.

## Claims

1. A data transfer interface for enabling access of a plurality of data processing devices (110, 120) to a single data storage drive (130), comprising:
a switch means (150, 650) connected to each of said plurality of data processing devices (110, 120) and connected to said data storage drive (130), and
a control means (140) for controlling said switch means (150) such that only a single one of said plurality of data processing devices (110, 120) accesses said data storage drive (130) at a time,
**characterized in that**
said switch means (150, 650) comprises a plurality of switches (660, 670), each comprising a buffer (1051, 1052) for holding data transmitted via the respective switch, and connecting an individual one of said plurality of data processing devices (110, 120) and said data storage drive (130), and
said control means (140) comprising a switch controller (780) for controlling said switches (660, 670) to connect said data storage drive (130) with a single one of said plurality of data processing devices (110, 120), and controlling said buffers to transmit signals between said data storage drive (130) and a single one of said plurality of data processing devices (110, 120).

2. A data transfer interface in accordance with claim 1, wherein each of said buffers (1051, 1052) comprising an output enabling means connected to said switch controller (1050, 2050) for controlling an output of data from said buffers (1051, 1052).

3. A data transfer interface in accordance with claim 1 or 2, wherein said control means comprising a control unit (440) for designating a single one of said plurality of data processing devices (110, 120) being permitted to access said data storage drive (130).

4. A data transfer interface in accordance with claim 3, wherein said control unit (440) being part of one of said plurality of data processing devices (410; 1010).

5. A data transfer interface in accordance with any of claims 1 to 4, wherein said control means (240) comprising a drive status detector (245) for detecting an operating status of said data storage drive (130), wherein said control means (240) controlling said switch means (150) in accordance with the detection result.

6. A data transfer interface in accordance with claim 5, wherein said drive status detector (245) detecting a completion of a data transfer between said data storage drive (130) and the data processing device accessing said data storage drive (130).

7. A data transfer interface in accordance with any of claims 1 to 6, wherein said control means (340) comprising a communication means (345) for exchanging control signals with at least one of said plurality of data processing devices (110, 120).

8. A data transfer interface in accordance with claim 7, wherein said control means (340) providing one of said plurality of data processing devices (110, 120) with an access permission signal, and said data processing device only accessing said data storage drive (130) upon receiving said access permission signal.

9. A data transfer interface in accordance with claim 7 or 8, wherein said control means (340) providing a data processing device accessing said data storage drive (130) with an access termination signal, whereupon said data processing device terminating an access to said data storage drive (130).

10. A data transfer interface in accordance with any of claims 7 to 9, wherein said control means (340) receiving an access request from one of said plurality of data processing devices (110, 120), and said control means (340) controlling said switch means (150) in accordance with said access request.

11. A data transfer interface in accordance with any of claims 1 to 10, wherein said control means (140) controlling said switch means (150) in such a manner that a currently performed data transfer operation between one of said plurality of data processing devices (110, 120) and said data storage drive (130) being completed.

12. A data transfer interface in accordance with any of claims 1 to 11, further comprising address signal lines, control signal lines and data signal lines connecting said plurality of data processing devices (110, 120) with said switch means (150) and said switch means (150) with said data storage drive (130).

13. A data transfer interface in accordance with any of claims 1 to 12, wherein said data storage drive (130) comprises an interface in accordance with the ATA/ATAPI standard.

14. A data transfer interface in accordance with any of claims 1 to 13, wherein at least one of said plurality of data processing devices (110, 120) comprises an interface in accordance with the ATA/ATAPI standard.

15. A data transfer interface in accordance with any of claims 1 to 14, further comprising an ATA/ATAPI converter (590) connected to one (510) of said plurality of data processing devices (510, 120) for converting access signals of said data processing device (510) into access signals in accordance with the ATA/ATAPI standard.

16. A method for enabling access of a plurality of data processing devices to a single data storage drive, comprising the steps of:
selecting (s10) one of said plurality of data processing devices,
controlling (s20) a switch means connected to each of said plurality of data processing devices and to said data storage drive such that only said selected data processing device accesses said data storage drive at a time,
**characterized in that**
said step of controlling (s20) said switch means comprises the steps of controlling a plurality of switches, each connecting an individual one of said plurality of data processing devices (110, 120) and said data storage drive (130), so as to connect said data storage drive (130) with a single one of said plurality of data processing devices (110, 120), and controlling buffers included in said switches such that data transmitted via a switch being hold in the respective buffer and signals being only transmitted between said selected data processing device and said data storage drive.

17. A method according to claim 16, further comprising the steps of:
providing an access permission signal to said selected data processing device, and
said selected data processing device only accessing said data storage drive upon receiving said access permission signal.

18. A method according to claim 16 or 17, wherein said step of selecting (s10) a data processing device comprising the steps of:
detecting (s11) whether or not a previously selected data processing device accesses said data storage drive,
selecting (s12, s13) a data processing device of said plurality of data processing devices only after said access has been completed.

19. A method according to any of claims 16 to 18, wherein an access to said data storage drive comprising a sequence of transfer operations, each transfer operation including:
an initialization step for preparing said data storage drive for data transfer, and
a transfer step for carrying out the transferring of data.

20. A method according to claim 19, wherein said step of selecting (s10) a data processing device being carried out after the completion of a predetermined number of transfer operations.

21. A method according to claim 19 or 20, wherein said step of selecting (s10) a data processing device comprising the steps of :
providing an access termination signal (s14) to the previously selected data processing device, wherein said data processing device terminates its access to said data storage drive by completing the current transfer operation, and
selecting (s15) a data processing device of said plurality of data processing devices after said transfer operation has been completed.

22. A method according to any of claims 16 to 21, wherein said step of selecting (s10) a data processing device being carried out after lapse of a predetermined time interval.

23. A method according to any of claims 20 to 22, wherein said step of selecting (s10) a data processing device being carried out upon receiving a data processing device designation signal, said selecting step (s10) being carried out in accordance with said data processing device designation signal.

24. A method according to any of claims 16 to 23, wherein said step of selecting (s10) a data processing device comprising the steps of:
accepting (s16) an access request from one of said plurality of data processing devices, and
selecting (s17) a data processing device in accordance with said access request.

## Patentansprüche

1. Datenübertragungsschnittstelle, die Zugriff einer Vielzahl von Datenverarbeitungsvorrichtungen (110, 120) auf ein einzelnes Datenspeicher-Laufwerk (130) ermöglicht, wobei sie umfasst:
eine Umschalteinheit (150, 650), die mit jeder der Vielzahl von Datenverarbeitungsvorrichtungen (110, 120) verbunden ist und mit dem Datenspeicher-Laufwerk (130) verbunden ist, und
eine Steuereinrichtung (140), mit der die Umschalteinrichtung (150) so gesteuert wird, dass zu einem Zeitpunkt jeweils nur eine einzelne der Vielzahl von Datenverarbeitungsvorrichtungen (110, 120) auf das Datenspeicher-Laufwerk (130) zugreift,
**dadurch gekennzeichnet, dass**
die Umschalteinrichtung (150, 650) eine Vielzahl von Schaltern (660, 670) umfasst, die jeweils einen Puffer (1051, 1052) zum Halten der über den jeweiligen Schalter übertragenen Daten umfassen und eine einzelne der Vielzahl von Datenverarbeitungsvorrichtungen (110, 120) und das Datenspeicher-Laufwerk (130) verbinden, und
die Steuereinrichtung (140) einen Schalt-Controller (780) umfasst, mit dem die Schalter (660, 670) so gesteuert werden, dass sie das Datenspeicher-Laufwerk (130) mit einer einzelnen der Vielzahl von Datenverarbeitungsvorrichtungen (110, 120) verbinden, und die Puffer so gesteuert werden, dass sie Signale zwischen dem Datenspeicher-Laufwerk (130) und einer einzelnen der Vielzahl von Datenverarbeitungsvorrichtungen (110, 120) senden.

2. Datenübertragungsschnittstelle nach Anspruch 1, wobei jeder der Puffer (1051, 1052) eine Ausgabe-Aktivierungseinrichtung umfasst, die mit dem Schalt-Controller (1050, 2050) verbunden ist, um eine Ausgabe von Daten von den Puffern (1051, 1052) zu steuern.

3. Datenübertragungsschnittstelle nach Anspruch 1 oder 2, wobei die Steuereinrichtung eine Steuereinheit (440) umfasst, mit der eine einzelne der Vielzahl von Datenverarbeitungsvorrichtungen (110, 120) angegeben wird, der Zugriff auf das Datenspeicher-Laufwerk (130) gestattet wird.

4. Datenübertragungsschnittstelle nach Anspruch 3, wobei die Steuereinheit (440) Teil der Vielzahl von Datenverarbeitungsvorrichtungen (410; 1010) ist.

5. Datenübertragungsschnittstelle nach einem der Ansprüche 1 bis 4, wobei die Steuereinrichtung (240) eine Laufwerkstatus-Erfassungseinrichtung (245) umfasst, mit der ein Betriebsstatus des Datenspeicher-Laufwerks (130) erfasst wird, und die Steuereinrichtung (240) die Schalteinrichtung (150) entsprechend dem Erfassungsergebnis steuert.

6. Datenübertragungsschnittstelle nach Anspruch 5, wobei die Laufwerkstatus-Erfassungseinrichtung (245) einen Abschluss einer Datenübertragung zwischen dem Datenspeicher-Laufwerk (130) und der Datenverarbeitungsvorrichtung erfasst, die auf das Datenspeicher-Laufwerk (130) zugreift.

7. Datenübertragungsschnittstelle nach einem der Ansprüche 1 bis 6, wobei die Steuereinrichtung (340) eine Kommunikationseinrichtung (345) zum Austauschen von Steuersignalen mit wenigstens einer der Vielzahl von Datenverarbeitungsvorrichtungen (110, 120) umfasst.

8. Datenübertragungsschnittstelle nach Anspruch 7, wobei die Steuereinrichtung (340) einer der Vielzahl von Datenverarbeitungsvorrichtungen (110, 120) ein Zugriffsgenehmigungssignal bereitstellt und die Datenverarbeitungsvorrichtung erst nach Empfang des Zugriffsgenehmigungssignals auf das Datenspeicher-Laufwerk (130) zugreift.

9. Datenübertragungsschnittstelle nach Anspruch 7 oder 8, wobei die Steuereinrichtung (340) einer Datenverarbeitungsvorrichtung, die auf das Datenspeicher-Laufwerk (130) zugreift, ein Zugriffsbeendigungssignal bereitstellt und die Datenverarbeitungsvorrichtung daraufhin einen Zugriff auf das Datenspeicher-Laufwerk (130) beendet.

10. Datenübertragungsschnittstelle nach einem der Ansprüche 7 bis 9, wobei die Steuereinrichtung (340) eine Zugriffsanforderung von einer der Vielzahl von Datenverarbeitungsvorrichtungen (110, 120) empfängt und die Steuereinrichtung (340) die Schalteinrichtung (150) entsprechend der Zugriffsanforderung steuert.

11. Datenübertragungsschnittstelle nach einem der Ansprüche 1 bis 10, wobei die Steuereinrichtung (140) die Schalteinrichtung (150) so steuert, dass ein aktuell durchgeführter Datenübertragungsvorgang zwischen einer der Vielzahl von Datenverarbeitungsvorrichtungen (110, 120) und dem Datenspeicher-Laufwerk (130) abgeschlossen wird.

12. Datenübertragungsschnittstelle nach einem der Ansprüche 1 bis 11, die des Weiteren Adress-Signalleitungen, Steuer-Signalleitungen und Daten-Signalleitungen umfasst, die die Vielzahl von Datenverarbeitungsvorrichtungen (110, 120) mit der Schalteinrichtung (150) und die Schalteinrichtung (150) mit dem Datenspeicher-Laufwerk (130) verbinden.

13. Datenübertragungsschnittstelle nach einem der Ansprüche 1 bis 12, wobei das Datenspeicher-Laufinrerk (130) eine Schnittstelle gemäß dem ATA/ATAPI-Standard umfasst.

14. Datenübertragungsschnittstelle nach einem der Ansprüche 1 bis 13, wobei wenigstens eine der Vielzahl von Datenverarbeitungsvorrichtungen (110, 120) eine Schnittstelle gemäß dem ATA/ATAPI-Standard umfasst.

15. Datenübertragungsschnittstelle nach einem der Ansprüche 1 bis 14, die des Weiteren einen ATA/ATAPI-Wandler (590) umfasst, der mit einer (510) der Vielzahl von Datenverarbeitungsvorrichtungen (510, 120) verbunden ist, um Zugriffssignale der Datenverarbeitungsvorrichtung (510) in Zugriffssignale gemäß dem ATA/ATAPI-Standard umzuwandeln.

16. Verfahren, mit dem Zugriff einer Vielzahl von Datenverarbeitungsvorrichtungen auf ein einzelnes Datenspeicher-Laufwerk ermöglicht wird, wobei es die folgenden Schritte umfasst:
Auswählen (s10) einer der Vielzahl von Datenverarbeitungsvorrichtungen,
Steuern (s20) einer Schalteinrichtung, die mit jeder der Vielzahl von Datenverarbeitungsvorrichtungen und dem Datenspeicher-Laufwerk verbunden ist, so dass jeweils nur die ausgewählte Datenverarbeitungsvorrichtung zu einem Zeitpunkt auf das Datenspeicher-Laufwerk zugreift,
**dadurch gekennzeichnet, dass**
der Schritt des Steuerns (s20) der Schalteinrichtung die Schritte umfasst, mit denen eine Vielzahl von Schaltern, die jeweils eine einzelne der Vielzahl von Datenverarbeitungsvorrichtungen (110, 120) und das Datenspeicher-Laufwerk (130) verbinden, so gesteuert werden, dass sie das Datenspeicher-Laufwerk (130) mit einer einzelnen der Vielzahl von Datenverarbeitungsvorrichtungen (110, 120) verbinden, und Puffer, die in den Schaltern enthalten sind, so gesteuert werden, dass Daten, die über einen Schalter gesendet werden, in dem jeweiligen Puffer gehalten werden, und Signale nur zwischen der ausgewählten Datenverarbeitungsvorrichtung und dem Datenspeicher-Laufwerk gesendet werden.

17. Verfahren nach Anspruch 16, das des Weiteren die folgenden Schritte umfasst:
Bereitstellen eines Zugriffsgenehmigungssignals für die ausgewählte Datenverarbeitungsvorrichtung, und
Zugreifen auf das Datenspeicher-Laufwerk durch die ausgewählte Datenverarbeitungsvorrichtung erst nach Empfangen des Zugriffsgenehmigungssignals.

18. Verfahren nach Anspruch 16 oder 17, wobei der Schritte des Auswählens (s10) einer Datenverarbeitungsvorrichtung die folgenden Schritte umfasst:
Erfassen (s11), ob eine zuvor ausgewählte Datenverarbeitungsvorrichtung auf das Datenspeicher-Laufwerk zugreift oder nicht,
Auswählen (s12, s13) einer Datenverarbeitungsvorrichtung der Vielzahl von Datenverarbeitungsvorrichtungen erst nachdem der Zugriff abgeschlossen worden ist.

19. Verfahren nach einem der Ansprüche 16 bis 18, wobei ein Zugriff auf das Datenspeicher-Laufwerk eine Sequenz von Übertragungsvorgängen umfasst und jeder Übertragungsvorgang einschließt:
einen Initialisierungsschritt zum Vorbereiten des Datenspeicher-Laufwerks für Datenübertragung, und
einen Übertragungsschritt zum Ausführen der Übertragung von Daten.

20. Verfahren nach Anspruch 19, wobei der Schritt des Auswählens (s10) einer Datenverarbeitungsvorrichtung nach dem Abschluss einer vorgegebenen Anzahl von Übertragungsvorgängen ausgeführt wird.

21. Verfahren nach Anspruch 19 oder 20, wobei der Schritt des Auswählens (s10) einer Datenverarbeitungsvorrichtung die folgenden Schritte umfasst:
Bereitstellen eines Zugriffsbeendigungssignals (s14) für die zuvor ausgewählte Datenverarbeitungsvorrichtung, wobei die Datenverarbeitungsvorrichtung ihren Zugriff auf das Datenspeicher-Laufwerk beendet, indem sie den aktuellen Übertragungsvorgang abschließt, und
Auswählen (s15) einer Datenverarbeitungsvorrichtung der Vielzahl von Datenverarbeitungsvorrichtungen, nachdem der Übertragungsvorgang abgeschlossen worden ist.

22. Verfahren nach einem der Ansprüche 16 bis 21, wobei der Schritt des Auswählens (s10) einer Datenverarbeitungsvorrichtung nach Ablauf eines vorgegebenen Zeitintervalls ausgeführt wird.

23. Verfahren nach einem der Ansprüche 20 bis 22, wobei der Schritt des Auswählens (s10) einer Datenverarbeitungsvorrichtung nach Empfang eines Datenverarbeitungsvorrichtungs-Angabesignals ausgeführt wird und der Auswählschritt (s10) entsprechend dem Datenverarbeitungsvorrichtungs-Angabesignal ausgeführt wird.

24. Verfahren nach einem der Ansprüche 16 bis 23, wobei der Schritt des Auswählens (s10) einer Datenverarbeitungsvorrichtung die folgenden Schritte umfasst:
Akzeptieren (s16) einer Zugriffsanforderung von einer der Vielzahl von Datenverarbeitungsvorrichtungen, und
Auswählen (s17) einer Datenverarbeitungsvorrichtung entsprechend der Zugriffsanforderung.

## Revendications

1. Interface de transfert de données pour permettre l'accès d'une pluralité de dispositifs de traitement de données (110, 120) à un lecteur de mémoire de données (130) unique, comprenant :
des moyens de commutation (150, 650) connectés à chacun de ladite pluralité de dispositifs de traitement de données (110, 120) et connectés audit lecteur de mémoire de données (130), et
des moyens de commande (140) pour commander lesdits moyens de commutation (150) de sorte qu'un seul de ladite pluralité de dispositifs de traitement de données (110, 120) accède audit lecteur de mémoire de données (130) à un instant donné,
**caractérisée en ce que**
lesdits moyens de commutation (150, 650) comprennent une pluralité de commutateurs (660, 670), comprenant chacun une mémoire tampon (1051, 1052) pour contenir des données transmises par l'intermédiaire du commutateur respectif, et connectant un dispositif individuel de ladite pluralité de dispositifs de traitement de données (110, 120) et ledit lecteur de mémoire de données (130), et
lesdits moyens de commande (140) comprennent un contrôleur de commutateurs (780) pour commander lesdits commutateurs (660, 670) pour connecter ledit lecteur de mémoire de données (130) à un seul dispositif de ladite pluralité de dispositifs de traitement de données (110, 120), et commander lesdites mémoires tampons pour transmettre des signaux entre ledit lecteur de mémoire de données (130) et un seul dispositif de ladite pluralité de dispositifs de traitement de données (110, 120).

2. Interface de transfert de données selon la revendication 1, dans laquelle chacune desdites mémoires tampons (1051, 1052) comprend des moyens de validation de sortie connectés audit contrôleur de commutateurs (1050, 2050) pour commander une sortie de données desdites mémoires tampons (1051, 1052).

3. Interface de transfert de données selon la revendication 1 ou 2, dans laquelle lesdits moyens de commande comprennent une unité de commande (440) pour désigner un seul dispositif de ladite pluralité de dispositifs de traitement de données (110, 120) qui est autorisé à accéder audit lecteur de mémoire de données (130).

4. Interface de transfert de données selon la revendication 3, dans laquelle ladite unité de commande (440) fait partie de l'un de ladite pluralité de dispositifs de traitement de données (410 ; 1010).

5. Interface de transfert de données selon l'une quelconque des revendications 1 à 4, dans laquelle lesdits moyens de commande (240) comprennent un détecteur d'état de lecteur (245) pour détecter un état de fonctionnement dudit lecteur de mémoire de données (130), dans laquelle lesdits moyens de commande (240) commandent lesdits moyens de commutation (150) en fonction du résultat de détection.

6. Interface de transfert de données selon la revendication 5, dans laquelle ledit détecteur d'état de lecteur (245) détecte l'achèvement d'un transfert de données entre ledit lecteur de mémoire de données (130) et le dispositif de traitement de données qui accède audit lecteur de mémoire de données (130).

7. Interface de transfert de données selon l'une quelconque des revendications 1 à 6, dans laquelle lesdits moyens de commande (340) comprennent des moyens de communication (345) pour échanger des signaux de commande avec au moins l'un de ladite pluralité de dispositifs de traitement de données (110, 120).

8. Interface de transfert de données selon la revendication 7, dans laquelle lesdits moyens de commande (340) fournissent à l'un de ladite pluralité de dispositifs de traitement de données (110, 120) un signal d'autorisation d'accès, et ledit dispositif de traitement de données n'accède audit lecteur de mémoire de données (130) que lors de la réception dudit signal d'autorisation d'accès.

9. Interface de transfert de données selon la revendication 7 ou 8, dans laquelle lesdits moyens de commande (340) fournissent à un dispositif de traitement de données qui accède audit lecteur de mémoire de données (130) un signal de fin d'accès, sur quoi ledit dispositif de traitement de données met fin à un accès audit lecteur de mémoire de données (130).

10. Interface de transfert de données selon l'une quelconque des revendications 7 à 9, dans laquelle lesdits moyens de commande (340) reçoivent une demande d'accès de l'un de ladite pluralité de dispositifs de traitement de données (110, 120), et lesdits moyens de commande (340) commandent lesdits moyens de commutation (150) en fonction de ladite demande d'accès.

11. Interface de transfert de données selon l'une quelconque des revendications 1 à 10, dans laquelle lesdits moyens de commande (140) commandent lesdits moyens de commutation (150) de manière à ce qu'une opération de transfert de données actuellement effectuée entre l'un de ladite pluralité de dispositifs de traitement de données (110, 120) et ledit lecteur de mémoire de données (130) soit achevée.

12. Interface de transfert de données selon l'une quelconque des revendications 1 à 11, comprenant en outre des lignes de signaux d'adresse, des lignes de signaux de commande et des lignes de signaux de données connectant ladite pluralité de dispositifs de traitement de données (110, 120) auxdits moyens de commutation (150) et lesdits moyens de commutation (150) audit lecteur de mémoire de données (130).

13. Interface de transfert de données selon l'une quelconque des revendications 1 à 12, dans laquelle ledit lecteur de mémoire de données (130) comprend une interface selon la norme ATA / ATAPI.

14. Interface de transfert de données selon l'une quelconque des revendications 1 à 13, dans laquelle au moins l'un de ladite pluralité de dispositifs de traitement de données (110, 120) comprend une interface selon la norme ATA / ATAPI.

15. Interface de transfert de données selon l'une quelconque des revendications 1 à 14, comprenant en outre un convertisseur ATA / ATAPI (590) connecté à l'un (510) de ladite pluralité de dispositifs de traitement de données (510, 120) pour convertir les signaux d'accès dudit dispositif de traitement de données (510) en des signaux d'accès selon la norme ATA / ATAPI.

16. Procédé pour permettre l'accès d'une pluralité de dispositifs de traitement de données à un lecteur de mémoire de données unique, comprenant les étapes consistant à :
sélectionner (s10) l'un de ladite pluralité de dispositifs de traitement de données,
commander (s20) des moyens de commutation connectés à chacun de ladite pluralité de dispositifs de traitement de données et audit lecteur de mémoire de données de sorte que seul ledit dispositif de traitement de données sélectionné accède audit lecteur de mémoire de données à un instant donné,
**caractérisé en ce que**
ladite étape de commander (s20) lesdits moyens de commutation comprend les étapes consistant à commander une pluralité de commutateurs, connectant chacun un dispositif individuel de ladite pluralité de dispositifs de traitement de données (110, 120) et ledit lecteur de mémoire de données (130), de manière à connecter ledit lecteur de mémoire de données (130) à un seul de ladite pluralité de dispositifs de traitement de données (110, 120), et commander les mémoires tampons incluses dans lesdits commutateurs de sorte que des données transmises par l'intermédiaire d'un commutateur soient maintenues dans la mémoire tampon respective et que des signaux soient transmis uniquement entre ledit dispositif de traitement de données sélectionné et ledit lecteur de mémoire de données.

17. Procédé selon la revendication 16, comprenant en outre l'étape consistant à :
fournir un signal d'autorisation d'accès audit dispositif de traitement de données sélectionné, et
ledit dispositif de traitement de données sélectionné n'accédant audit lecteur de mémoire de données que lors de la réception dudit signal d'autorisation d'accès.

18. Procédé selon la revendication 16 ou 17, dans lequel ladite étape de sélectionner (s10) un dispositif de traitement de données comprend les étapes consistant à :
détecter (s11) si, oui ou non, un dispositif de traitement de données précédemment sélectionné accède audit lecteur de mémoire de données,
sélectionner (s12) un dispositif de traitement de données de ladite pluralité de dispositifs de traitement de données seulement après que ledit accès a été achevé.

19. Procédé selon l'une quelconque des revendications 16 à 18, dans lequel un accès audit lecteur de mémoire de données comprend une séquence d'opérations de transfert, chaque opération de transfert comprenant :
une étape d'initialisation pour préparer ledit lecteur de mémoire de données pour le transfert de données, et
une étape de transfert pour exécuter le transfert de données.

20. Procédé selon la revendication 19, dans lequel ladite étape de sélectionner (s10) un dispositif de traitement de données est effectuée après l'achèvement d'un nombre prédéterminé d'opérations de transfert.

21. Procédé selon la revendication 19 ou 20, dans lequel ladite-étape de sélectionner (s10) un dispositif de traitement de données comprend les étapes consistant à :
fournir un signal de fin d'accès (s14) au dispositif de traitement de données précédemment sélectionné, dans lequel ledit dispositif de traitement de données met fin à son accès audit lecteur de mémoire de données en achevant l'opération de transfert actuelle, et
sélectionner (s15) un dispositif de traitement de données de ladite pluralité de dispositifs de traitement de données après que ladite opération de transfert a été achevée.

22. Procédé selon l'une quelconque des revendications 16 à 21, dans lequel ladite étape de sélectionner (s10) un dispositif de traitement de données est effectuée à la fin d'un intervalle de temps prédéterminé.

23. Procédé selon l'une quelconque des revendications 16 à 22, dans lequel ladite étape de sélectionner (s10) un dispositif de traitement de données est effectuée lors de la réception d'un signal de désignation de dispositif de traitement de données, ladite étape de sélection (s10) étant effectuée conformément audit signal de désignation de dispositif de traitement de données.

24. Procédé selon l'une quelconque des revendications 16 à 23, dans lequel ladite étape de sélectionner (s10) un dispositif de traitement de données comprend les étapes consistant à :
accepter (s16) une demande d'accès de l'un de ladite pluralité de dispositifs de traitement de données, et
sélectionner (s17) un dispositif de traitement de données conformément à ladite demande d'accès.
